(19) Europäisches Patentamt
European Patent Office
Office européen des brevets

(11) EP 1 781 739 B1

(12) **EUROPÄISCHE PATENTSCHRIFT**

(45) Veröffentlichungstag und Bekanntmachung des Hinweises auf die Patenterteilung:
**18.02.2009 Patentblatt 2009/08**

(21) Anmeldenummer: **05777971.2**

(22) Anmeldetag: **09.08.2005**

(51) Int Cl.:
***C08L 33/12*** (2006.01) ***C08L 25/12*** (2006.01)
***C08L 51/04*** (2006.01) ***C08L 101/00*** (2006.01)

(86) Internationale Anmeldenummer:
**PCT/EP2005/008607**

(87) Internationale Veröffentlichungsnummer:
**WO 2006/018178 (23.02.2006 Gazette 2006/08)**

# (54) THERMOPLASTISCHE FORMMASSEN MIT VERBESSERTEN FLIESS- UND ENTFORMUNGSEIGENSCHAFTEN

THERMOPLASTIC MOLDING COMPOUNDS WITH IMPROVED PROPERTIES WITH REGARD TO FLOW AND DEMOLDING

MATIERES DE MOULAGE THERMOPLASTIQUES AUX PROPRIETES D'ECOULEMENT ET DE DEMOULAGE AMELIOREES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.08.2004 DE 102004038978**
**08.12.2004 DE 102004059243**

(43) Veröffentlichungstag der Anmeldung:
**09.05.2007 Patentblatt 2007/19**

(73) Patentinhaber: **BASF SE**
**67056 Ludwigshafen (DE)**

(72) Erfinder:
- **STORK, Martin**
**68199 Mannheim (DE)**
- **BRUCHMANN, Bernd**
**67251 Freinsheim (DE)**
- **EIPPER, Andreas**
**67067 Ludwigshafen (DE)**
- **NIESSNER, Norbert**
**67159 Friedelsheim (DE)**
- **MC KEE, Graham, Edmund**
**67433 Neustadt (DE)**
- **WEBER, Martin**
**67487 Maikammer (DE)**
- **GOTTSCHALK, Axel**
**67435 Neustadt (DE)**
- **RIECHERS, Sven**
**Randolph Township, NJ 07869 (US)**
- **STUMBE, Jean-Francois**
**F-67200 Strasbourg (FR)**

(56) Entgegenhaltungen:
**EP-A- 1 424 360** **WO-A-97/08241**

- **MASSA D J ET AL: "NOVEL BLENDS OF HYPERBRANCHED POLYESTERS AND LINEAR POLYMERS" MACROMOLECULES, ACS, WASHINGTON, DC, US, Bd. 28, Nr. 9, 24. April 1995 (1995-04-24), Seiten 3214-3220, XP000500418 ISSN: 0024-9297**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft thermoplastische Formmassen, enthaltend eine Mischung aus

(A) 30 bis 68,99 Gew.-%, bezogen auf die Summe der Komponenten (A), (B), (C) und (D) eines Methylmethacrylat-Polymerisates, erhältlich durch Polymerisation einer Mischung, bestehend aus

(A1) 90 bis 100 Gew.-%, bezogen auf (A), Methylmethacrylat,und

(A2) 0 bis 10 Gew.-%, bezogen auf (A), eines $C_1$-$C_8$-Alkylesters der Acrylsäure, und

(B) 30 bis 68,99 Gew.-%, bezogen auf die Summe der Komponenten (A), (B), (C) und (D), eines Copolymerisates, erhältlich durch Polymerisation einer Mischung, bestehend aus

(B1) 75 bis 88 Gew.-%, bezogen auf (B), eines vinylaromatischen Monomeren und

(B2) 12 bis 25 Gew.-%, bezogen auf (B), eines Vinylcyanids

und

(C) 1 bis 39,99 Gew.-%, bezogen auf die Summe der Komponenten (A), (B), (C) und (D), eines Pfropfcopolymerisates, erhältlich aus

(C1) 60 bis 90 Gew.-%, bezogen auf (C), eines Kerns, erhältlich durch Polymerisation eines Monomerengemisches, bestehend aus

(C11) 65 bis 90 Gew.-%, bezogen auf (C1), eines 1,3-Diens und

(C12) 10 bis 35 Gew.-% bezogen auf (C1), eines vinylaromatischen Monomeren

und

(C2) 5 bis 20 Gew.-%, bezogen auf (C), einer ersten Pfropfhülle, erhältlich durch Polymerisation eines Monomerengemisches, bestehend aus

(C21) 30 bis 60 Gew.-%, bezogen auf (C2), eines vinylaromatischen Monomeren,

(C22) 40 bis 70 Gew.-%, bezogen auf (C2), eines $C_1$-$C_8$-Alkylesters der Methacrylsäure und

(C23) 0 bis 3 Gew.-%, bezogen auf (C2), eines vernetzenden Monomeren,

und

(C3) 5 bis 20 Gew.-%, bezogen auf (C), einer zweiten Pfropfhülle, erhältlich durch Polymerisation eines Monomerengemisches, bestehend aus

(C31) 70 bis 98 Gew.-%, bezogen auf (C3), eines $C_1$-$C_8$-Alkylesters der Methacrylsäure und

(C32) 2 bis 30 Gew.-%, bezogen auf (C3), eines $C_1$-$C_8$-Alkylesters der Acrylsäure,

mit der Maßgabe, dass das Gewichtsverhältnis von (C2) zu (C3) im Bereich von 2:1 bis 1:2 liegt,
und

(D) 0,01 bis 39 Gew.-%, bezogen auf die Summe der Komponenten (A), (B), (C) und (D), mindestens eines hoch- oder hyperverzweigten Polymers, ausgewählt aus der Gruppe

(D1) hoch- oder hyperverzweigter Polycarbonate, und

(D2) hoch- oder hyperverzweigter Polyester des Typs $A_x + B_y$ wobei x mindestens 1,1 und y mindestens 2,1 beträgt,

und

(E) gegebenenfalls üblichen Zusatzstoffen in Mengen von bis zu 20 Gew.-%, bezogen auf die Summe der Komponenten (A), (B), (C) und (D).

Weiterhin betrifft die vorliegende Erfindung Verfahren zur Herstellung der erfindungsgemäßen thermoplastischen Formmassen, deren Verwendung und die daraus erhältlichen Formkörper, Fasern, Folien oder Schäume, sowie Entformungshilfsmittel für thermoplastische Formmassen.

Aus WO 97/08241 sind Formmassen bekannt, die aus einem harten Methylmethacrylat-Polymerisat, einem harten Vinylaromat-Vinylcyanid-Polymerisat und einem weichen Pfropfcopolymerisat umfassend einen kautschukelastischen Pfropfkern, eine erste Pfropfhülle aus einem Vnylaromat-Alkylmethacrylat-Polymerisat und eine-zweite Pfropfhülle aus einem Alkyl(meth)acrylat-Polymerisat, aufgebaut sind. Diese Formmassen zeichnen sich durch gute Schlagzähigkeit, hohe Fließfähigkeit, hohe Lichttransmission, geringen Streulichtanteil und geringen Kantengelbstich aus. Bezüglich ihrer Fließfähigkeit und Entformungseigenschaften sind diese Formmassen für manche Anwendungsgebiete aber noch verbesserungswürdig.

Eine verbesserte Fließfähigkeit wird üblicherweise durch Zusatz von Polymeren mit niedrigem Molekulargewicht bzw. Oligomeren, erreicht; allerdings verschlechtern sich dadurch oftmals die mechanischen Eigenschaften, die Erweichungstemperatur (Vicat) und die optischen Eigenschaften, wie Transparenz, deutlich.

Dendritische Polymere mit perfekt symmetrischer Struktur, sogenannte Dendrimere, lassen sich ausgehend von einem zentralen Molekül durch kontrollierte schrittweise Verknüpfung von jeweils zwei oder mehr di- oder mehrfunktionellen Monomeren mit jedem bereits gebundenen Monomer herstellen. Dabei wächst mit jedem Verknüpfungsschritt die Zahl der Monomerendgruppen (und damit der Verknüpfungen) exponentiell an, und man erhält Polymere mit baumartigen Strukturen, im Idealfall kugelförmig, deren Äste jeweils exakt dieselbe Anzahl von Monomereinheiten enthalten. Aufgrund dieser perfekten Struktur sind die Polymereigenschaften vorteilhaft, beispielsweise beobachtet man eine überraschend geringe Viskosität und eine hohe Reaktivität aufgrund der hohen Anzahl funktioneller Gruppen an der Kugeloberfläche. Allerdings wird die Herstellung dadurch verkompliziert, dass bei jedem Verknüpfungsschritt Schutzgruppen eingeführt und wieder entfernt werden müssen und Reinigungsoperationen erforderlich sind, weshalb man Dendrimere üblicherweise nur im Labormaßstab herstellt.

Jedoch kann man mit großtechnischen Verfahren hochverzweigte bzw. hyperverzweigte Polymere herstellen. Sie weisen neben perfekten dendritischen Strukturen auch lineare Polymerketten und ungleiche Polymeräste auf, was jedoch die Polymereigenschaften verglichen zu denen der perfekten Dendrimere nicht wesentlich verschlechtert. Hyperverzweigte Polymere lassen sich über zwei Synthesewege herstellen, die als $AB_2$ und $A_x + B_y$ bekannt sind. Darin stehen $A_x$ und $B_y$ für verschiedene Monomere und die Indices x und y für die Anzahl der funktionellen Gruppen, die in A bzw. B enthalten sind, also für die Funktionalität von A bzw. B. Beim $AB_2$-Weg wird ein trifunktionelles Monomer mit einer reaktiven Gruppe A und zwei reaktiven Gruppen B zu einem hoch- oder hyperverzweigten Polymer umgesetzt. Bei der $A_x + B_y$-Synthese, dargestellt am Beispiel der $A_2 + B_3$-Synthese, setzt man ein difunktionelles Monomer $A_2$ mit einem trifunktionellen Monomer $B_3$ um. Dabei entsteht zunächst ein 1:1-Addukt aus A und B mit im Mittel einer funktionellen Gruppe A und zwei funktionellen Gruppen B, das dann ebenfalls zu einem hoch- oder hyperverzweigten Polymer reagieren kann.

Die WO 97/45474 beschreibt Polymermischungen aus hyperverzweigten dendritischen Polyestern und anderen Thermoplasten wie Polystyrol oder ABS (Acrylnitril-Butadien-Styrol-Copolymer), wobei beide Komponenten bestimmte, zu Pfropfreaktionen befähigte funktionelle Gruppen tragen. Diese Funktionalisierung des Thermoplasten erfolgt in einem separaten Schritt durch Pfropfung eines ungesättigten Monomers auf den Thermoplasten.

In der WO 96/11962 werden nichtlineare monovinylaromatische Polymere mit Kamm-, Stern- oder dendritischer Struktur beschrieben, die 1 bis 4 Verzweigungspunkte aufweisen. Die Polymere können Kautschuke enthalten; Mischungen der Polymere mit üblichen linearen Styrolcopolymeren wie SAN (Styrol-Acrylnitril-Copolymer) werden jedoch nicht beschrieben.

Gorda et al beschreiben in Journal of Applied Polymer Science 1993, Vol. 50, Seiten 1977-1983 Mischungen aus SAN und sternförmigen Polymeren aus ε-Caprolacton. Sternförmige Polymere unterscheiden sich grundlegend von dendritischen oder hyperverzweigten Polymeren: bei dendritischen und hyperverzweigten Polymeren nimmt die Anzahl der Verzweigungen mit wachsender Entfernung vom Zentrum exponentiell zu, d.h. die Zahl der Polymeräste wächst nach außen stark an. Hingegen weisen Stempolymere unverzweigte Äste auf, d.h. die Funktionalität des Zentralmoleküls bestimmt die Anzahl der Sternäste. Zu dieser Unterscheidung siehe auch Seiten 7-8 der erwähnten WO 97/45474 und dort insbesondere die Formeln (III) bis (VI).

Die EP-A 545184 beschreibt lineare, sternförmige oder dendrimere Blockcopolymere aus Acrylsäureestern

und Methacrylsäureestern wie Methylmethacrylat (MMA), und deren Mischungen mit u.a. SAN. Die Blockcopolymere werden durch die sehr wasserempfindliche Gruppentransferpolymerisation (GTP) hergestellt. Dendritische Polymere ohne Blockstruktur werden nicht erwähnt.

Sunder et al. offenbaren in Macromolecules 2000, 33, Seiten 1330-1337 mit Carbonsäuren veresterte, hyperverzweigte Polyglycerole. Mischungen dieser Polymere mit Styrolcopolymeren werden nicht erwähnt.

In der DE-A 43 28 004 werden thermoplastische Blockcopolymere mit sternförmig radial angeordneten Ästen, und deren Mischungen mit u.a. SAN, ABS oder ASA (Acrylnitril-Styrol-Acrylsäureester-Copolymer), beschrieben. Auch diese Blockcopolymere werden durch Gruppentransferpolymerisation (GTP) hergestellt, wozu rigoroser Feuchtigkeitsausschluss erforderlich ist. Dendritische Polymere ohne Blockstruktur werden nicht erwähnt.

In den nicht vorveröffentlichten Patentanmeldungen DE 102004 005652.8 und DE 102004 005657.9, beide vom 04.02.04, werden neue Fließverbesser für Polyester vorgeschlagen.

Der vorliegenden Erfindung lag daher die Aufgabe zugrunde, thermoplastische Formmassen auf Basis harter Methylmethacrylat-Polymerisate, harter Vinylaromat-Vinylcyanid-Polymerisate und weicher Pfropfcopolymerisate zur Verfügung zu stellen, die bei vergleichbaren mechanischen und optischen Eigenschaften eine verbesserte Fließfähigkeit aufweisen. Der Fließverbesserer sollte sich in einfacher Weise herstellen lassen. Ferner sollten die thermoplastischen Formmassen beispielsweise bei der Herstellung von Formteilen eine verbesserte Entformbarkeit aufweisen, um einen erhöhten Durchsatz bzw. verringerte Herstellkosten zu ermöglichen.

Demgemäß wurden die eingangs definierten thermoplastischen Formmassen enthaltend die Komponente (D) gefunden.

Des weiteren wurden Verfahren zu deren Herstellung, ihre Verwendung zur Herstellung von Formkörpern, Fasern, Folien oder Schäumen, sowie Formkörper, Fasern, Folien oder Schäume enthaltend die erfindungsgemäßen thermoplastischen Formmassen, gefunden.

Weiterhin wurden Entformungshilfsmittel für thermoplastische Formmassen gefunden.

Die erfindungsgemäßen thermoplastischen Formmassen, Verfahren, Verwendungen und Formkörper, Fasern, Folien oder Schäume sowie die Entformungshilfsmittel werden im folgenden beschrieben.

Die erfindungsgemäßen thermoplastischen Formmassen enthalten

(A) 30 bis 68,99 Gew.-%, vorzugsweise von 32,5 bis 57,0 Gew.-%, jeweils bezogen auf die Summe der Komponenten (A), (B), (C) und (D), eines Methylmethacrylat-Polymerisates, erhältlich durch Polymerisation einer Mischung, bestehend aus

(A1) 90 bis 100 Gew.-%, vorzugsweise von 92 bis 98 Gew.-%, jeweils bezogen auf (A), Methylmethacrylat, und

(A2) 0 bis 10 Gew.-%, vorzugsweise von 2 bis 8 Gew.-%, jeweils bezogen auf (A), eines $C_1$-$C_8$-Alkylesters der Acrylsäure

(B) 30 bis 68,99 Gew.-%, vorzugsweise von 32,5 bis 57,0 Gew.-%, jeweils bezogen auf die Summe der Komponenten (A), (B), (C) und (D), eines Copolymerisates, erhältlich durch Polymerisation einer Mischung, bestehend aus

(B1) 75 bis 88 Gew.-%, vorzugsweise von 79 bis 85 Gew.-%, jeweils bezogen auf (B), eines vinylaromatischen Monomeren und

(B2) 12 bis 25 Gew.-%, vorzugsweise von 15 bis 21 Gew.-%, jeweils bezogen auf (B), eines Vinylcyanids

und

(C) 1 bis 39,99 Gew.-%, vorzugsweise von 10 bis 34,5 Gew.-%, jeweils bezogen auf die Summe der Komponenten (A), (B), (C) und (D), eines Pfropfcopolymerisates, erhältlich aus

(C1) 60 bis 90 Gew.-%, vorzugsweise von 70 bis 80 Gew.-%, jeweils bezogen auf (C), eines Kerns, erhältlich durch Polymerisation eines Monomerengemisches, bestehend aus

(C11) 65 bis 90 Gew.-%, vorzugsweise von 70 bis 85 Gew.-%, jeweils bezogen auf (C1), eines 1,3-Diens und

(C12) 10 bis 35 Gew.-%, vorzugsweise von 15 bis 30 Gew.-%, jeweils bezogen auf (C1), eines vinylaromatischen Monomeren

und

(C2) 5 bis 20 Gew.-%, vorzugsweise von 10 bis 15 Gew.-%, jeweils bezogen auf (C), einer ersten Pfropfhülle, erhältlich durch Polymerisation eines Monomerengemisches, bestehend aus

(C21) 30 bis 60 Gew.-%, vorzugsweise von 30 bis 39 Gew.-%, besonders bevorzugt von 31 bis 35 Gew.-%, jeweils bezogen auf (C2), eines vinylaromatischen Monomeren

(C22) 40 bis 70 Gew.-%, vorzugsweise von 61 bis 70 Gew.-%, besonders bevorzugt von 63 bis 68 Gew.-%, jeweils bezogen auf (C2), eines $C_1$-$C_8$-Alkylesters der Methacrylsäure und

(C23) 0 bis 3 Gew.-%, vorzugsweise von 0 bis 2 Gew.-%, besonders bevorzugt von 1 bis 2 Gew.-%, jeweils bezogen auf (C2), eines vernetzenden Monomeren

und

(C3) 5 bis 20 Gew.-%, vorzugsweise von 10 bis 15 Gew.-%, jeweils bezogen auf (C), einer zweiten Pfropfhülle, erhältlich durch Polymerisation eines Monomerengemisches, bestehend aus

(C31) 70 bis 98 Gew.-%, vorzugsweise von 75 bis 92 Gew.-%, jeweils bezogen auf (C3), eines $C_1$-$C_8$-Alkylesters der Methacrylsäure und
(C32) 2 bis 30 Gew.-%, vorzugsweise von 8 bis 25 Gew.-%, jeweils bezogen auf (C3), eines $C_1$-$C_8$-Alkylesters der Acrylsäure,

mit der Maßgabe, dass das Gewichtsverhältnis von (C2) zu (C3) im Bereich von 2:1 bis 1:2 liegt, und

(D) 0,01 bis 39 Gew.-%, vorzugsweise von 0,5 bis 10 Gew.-%, jeweils bezogen auf die Summe der Komponenten (A), (B), (C) und (D), mindestens eines hoch- oder hyperverzweigten Polymers, ausgewählt aus der Gruppe

(D1) hoch- oder hyperverzweigter Polycarbonate und

(D2) hoch- oder hyperverzweigter Polyester des Typs $A_x$ + $B_y$ wobei x mindestens 1,1 und y mindestens 2,1 beträgt,

und

(E) gegebenenfalls üblichen Zusatzstoffen in Mengen von 0 bis 20 Gew.-%, vorzugsweise von 0 bis 10 Gew.-%, jeweils bezogen auf die Summe der Komponenten (A), (B), (C) und (D).

Komponente (A)

Die in den erfindungsgemäßen thermoplastischen Formmassen verwendeten Methylmethacrylat-Polymerisate (A) sind entweder Homopolymerisate aus Methylmethacrylat (MMA) oder Copolymerisate aus MMA mit bis zu 10 Gew.-%, bezogen auf (A), eines $C_1$-$C_8$-Alkylesters der Acrylsäure.

Als $C_1$-$C_8$-Alkylester der Acrylsäure (Komponente A2) kann man Methylacrylat, Ethylacrylat, Propylacrylat, n-Butylacrylat, n-Pentylacrylat, n-Hexylacrylat, n-Heptylacrylat, n-Octylacrylat und 2-Ethylhexylacrylat sowie Mischungen davon einsetzen, vorzugsweise Methylacrylat, Ethylacrylat, n-Butylacrylat, 2-Ethylhexylacrylat oder Mischungen davon, besonders bevorzugt Methylacrylat.

Die Methylmethacrylat-(MMA)-Polymerisate können durch Substanz-, Lösung- oder Perlpolymerisation nach bekannten Methoden hergestellt werden (siehe beispielsweise Kunststoff-Handbuch, Band IX, "Polymethacrylate", Vieweg/Esser, Carl-Hanser-Verlag 1975) und sind im Handel erhältlich. Bevorzugt setzt man Methylmethacrylat-Polymerisate ein, deren Gewichtsmittel-Werte $M_w$ der Molmassen im Bereich von 60.000 bis 300.000 g/mol liegen (bestimmt durch Lichtstreuung in Chloroform).

Komponente (B)

Die Komponente (B) ist ein Copolymerisat aus einem vinylaromatischen Monomeren (B1) und Vinylcyanid (B2).

Als vinylaromatische Monomere (Komponente B1) kann man Styrol, ein- bis dreifach mit $C_1$-$C_8$-Alkylresten substituiertes Styrol wie p-Methylstyrol oder tert.-Butylstyrol sowie $\alpha$-Methylstyrol, bevorzugt Styrol, einsetzen.

Als Vinylcyanid (Komponente B2) kann man Acrylnitril und/oder Methacrylnitril, bevorzugt Acrylnitril, einsetzen.

Außerhalb des oben angegebenen Bereiches der Zusammensetzung der Komponente (B) erhält man üblicherweise bei Verarbeitungstemperaturen über 240°C trübe Formmassen, die Schlieren aufweisen.

Die Copolymerisate (B) können nach bekannten Verfahren hergestellt werden, wie durch Substanz-, Lösung-, Suspensions- oder Emulsions-Polymerisation, bevorzugt durch Lösungspolymerisation (siehe GB-A 14 72 195). Bevorzugt sind dabei Copolymerisate (B) mit Molmassen $M_w$ von 60.000 bis 300.000 g/mol, bestimmt durch Lichtstreuung in Dimethylformamid.

Komponente (C)

Als Komponente (C) wird ein Pfropfcopolymerisat verwendet, aus einem Kern (C1) und zweier darauf aufgebrachter Pfropfhüllen (C2) und (C3).

Der Kern (C1) stellt die Pfropfgrundlage dar und weist einen Quellungsindex QI von 15 bis 50, insbesondere von 20 bis 40 auf, bestimmt durch Quellungsmessung in Toluol bei Raumtemperatur.

Als 1,3-Dien (Komponente C11) des Kerns des Pfropfcopolymerisats (Komponente C1) kann man Butadien und/oder Isopren einsetzen.

Als vinylaromatisches Monomer (Komponente C12) kann man Styrol oder vorzugsweise am Kern mit einer, vorzugsweise in $\alpha$-Stellung, oder auch mehreren $C_1$-$C_8$-Alkylgruppe(n), vorzugsweise Methyl, substituiertes Styrol einsetzen.

Bevorzugt weist der Kern des Pfropfcopolymerisats eine Glasübergangstemperatur von kleiner als 0°C auf. Die mittlere Teilchengröße des Kerns liegt im Bereich von 30 bis 250 nm, besonders bevorzugt im Bereich von 50 bis 180 nm. Üblicherweise stellt man den Kern durch Emulsionspolymerisation her (siehe beispielsweise Encyclopedia of Polymer Science and Engineering, Vol. 1, S. 401 ff).

Auf den Kern (C1) wird die Pfropfhülle (C2) aufgebracht, welche die Monomere (C21), (C22) und gegebenenfalls (C23) enthält.

Als vinylaromatisches Monomer (Komponente C21) kann man Styrol oder vorzugsweise am Kern mit einer, vorzugsweise in $\alpha$-Stellung, oder auch mehreren $C_1$-$C_8$-Alkylgruppe(n), vorzugsweise Methyl, substituiertes Styrol einsetzen.

Als $C_1$-$C_8$-Alkylester der Methacrylsäure (Komponente C22) verwendet man erfindungsgemäß Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere.

Als Monomere (C23) können übliche vernetzend wirkende Monomere eingesetzt werden, also im wesentlichen di -oder polyfunktionelle Comonomere, insbesondere Alkylenglykoldi(meth)acrylate wie Ethylen-, Propylen- und Butylenglykoldi(meth)acrylat, Allylmethacrylat, (Meth)acrylate von Glycerin, Trimethylolpropan, Pentaerythrit oder Vinylbenzole wie Di -oder Trivinylbenzol. Bevorzugt wird Butylenglykoldimethacrylat, Butylenglykoldiacrylat und Dihydrodicyclopentadienylacrylat in Form eines Isomerengemischs, besonders bevorzugt Dihydrodicyclopentadienylacrylat in Form eines Isomerengemischs, eingesetzt.

Auf die Pfropfhülle (C2) wiederum wird eine weitere Pfropfhülle (C3) aufgebracht, welche die Monomere (C31) und (C32) aufweist. Die Monomere (C31) sind $C_1$-$C_8$-Alkylester der Methacrylsäure, bei den Monomeren (C32) handelt es sich um $C_1$-$C_8$-Alkylester der Acrylsäure.

Als $C_1$-$C_8$-Alkylester der Methacrylsäure (Monomere C31) verwendet man erfindungsgemäß Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere.

Als $C_1$-$C_8$-Alkylester der Acrylsäure (Monomere C32) kann man Methylacrylat (MA), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei Methylacrylat besonders bevorzugt ist, sowie Mischungen dieser Monomere untereinander einsetzen.

Die Herstellung der beiden Pfropfhüllen (C2) und (C3) erfolgt in Gegenwart des Kerns (C1) nach literaturbekannten Methoden, insbesondere durch Emulsionspolymerisation (Encyclopedia of Polymer Science and Engineering, Vol. 1, Seite 401 ff.). Durch die dabei angewandte sogenannte Saatfahrweise werden bei der Herstellung der-beiden Pfropfhüllen keine neuen Teilchen gebildet. Darüber hinaus ermöglicht es die Saatfahrweise die Zahl und die Art der Teilchen in beiden Pfropfstufen durch die Menge und die Art des eingesetzten Emulgators zu bestimmen. Die Emulsionspolymerisation wird üblicherweise durch Polymerisationsinitiatoren ausgelöst.

Bei der Emulsionspolymerisation können ionogene und nicht ionogene Emulgatoren verwendet werden.

Geeignete Emulgatoren sind beispielsweise Dioctylnatriumsulfosuccinat, Natriumlaurylsulfat, Natriumdodecylbenzolsulfonat, Alkylphenoxypolyethylensulfonate und Salze von langkettigen Carbon- und Sulfonsäuren.

Als nichtionogene Emulgatoren sind beispielsweise Fettalkoholpolyglykolether, Alkylarylpolyglykolether, Fettsäuremonoethanolamide sowie ethoxylierte Fettsäureamide und -amine geeignet.

Bezogen auf das Gesamtgewicht des Emulsionspfropfcopolymerisates liegt die Gesamtemulgatormenge vorzugsweise bei 0,05 bis 5 Gew.-%.

Als Polymerisationsinitiatoren können Ammonium- und Alkaliperoxodisulfate wie Kaliumperoxodisulfat sowie Initiatorkombinationssysteme wie Natriumpersulfat, Natriumhydrosulfit, Kaliumpersulfat, Natriumformaldehydsulfoxylat und Kaliumperoxodisulfat, Natriumdithionit-Eisen-II-sulfat verwendet werden, wobei die Polymerisationstemperatur im Fall der thermisch zu aktivierenden Ammonium- und Alkaliperoxodisulfate bei 50 bis 100°C und bei den Initiatorkombinationen, die als Redoxsysteme wirksam sind, darunter liegen kann, etwa im Bereich von 20 bis 50°C.

Die gesamte Initiatormenge liegt vorzugsweise zwischen 0,02 und 1,0 Gew.-%, bezogen auf das fertige Emulsionspolymerisat.

Sowohl bei der Herstellung der Grundstufe, d.h. des Kerns (C1), als auch bei der Herstellung der beiden Pfropfstufen, d.h. der beiden Pfropfhüllen (C2) und (C3), können ferner Polymerisationsregler eingesetzt werden. Als Polymerisationsregler dienen u.a. Alkylmercaptane wie beispielsweise n- oder tert. -Dodecylmercaptan. Die Polymerisationsregler werden üblicherweise in einer Menge von 0,01 bis 1,0 Gew.-%, bezogen auf die jeweilige Stufe, eingesetzt.

Im übrigen wird das erfindungsgemäß zu verwendende Emulsionspfropfcopolymerisat so hergestellt, daß man eine wäßrige Mischung, bestehend aus Monomeren, Vernetzer, Emulgator, Initiator, Regler und einem Puffersystem in einem mit Stickstoff inertisierten Reaktor vorlegt, in der Kälte unter Rühren inertisiert und dann im Laufe von 15 bis 120 Minuten auf die Polymerisationstemperatur bringt. Anschließend wird bis zu einem Umsatz von mindestens 95 % polymerisiert. Monomere, Vernetzer, Emulgator, Initiator und Regler können auch komplett oder teilweise als Zulauf der wässrigen Vorlage zugeführt werden.

Gegebenenfalls nach einer Nachreaktionszeit von 15 bis 120 Minuten werden die Stufen (C2) und (C3) unter Zulauf der Monomeren in Gegenwart der bereits gebildeten Stufe (C1) durch Emulsionspolymerisation erzeugt.

Die Isolierung des Emulsionspfropfcopolymerisates aus dem erhaltenen Latex erfolgt auf bekannte Weise durch Ausfällung, Filtration und anschließender Trocknung. Für die Ausfällung können beispielsweise wässrige Lösungen von anorganischen Salzen wie Natriumchlorid, Natriumsulfat, Magnesiumsulfat und Calciumchlorid, wässrige Lösungen von Salzen der Ameisensäure wie Magnesiumformiat, Calciumformiat und Zinkformiat, wässrige Lösungen von anorganischen Säuren wie Schwefel- und Phosphorsäure sowie wässrige ammoniakalische und aminische Lösungen sowie andere wässrige alkalische Lösungen, z.B. von Natrium- und Kaliumhydroxid verwendet werden. Die Fällung kann aber auch durch physikalische Methoden, beispielsweise Gefrierfällung, Scherfällung, Dampffällung erfolgen.

Die Trocknung kann beispielsweise durch Gefrier-, Sprüh-, Wirbelschicht- und Umlufttrocknung erfolgen.

Das ausgefällte Emulsionspfropfcopolymerisat kann auch ohne Trocknung weiterverarbeitet werden.

Das Pfropfcopolymerisat (C) weist vorzugsweise einen Quellungsindex QI von 10 bis 40, insbesondere von 12 bis 35 auf. Der Quellungsindex wird dabei durch Quellungsmessung in Toluol bei Raumtemperatur bestimmt.

Die erfindungsgemäßen thermoplastischen Formmassen zeichnen sich in einer bevorzugten Ausführungsform dadurch aus, dass der Brechungsindex ($n_D$-$C_2$) der ersten Pfropfhülle (C2) größer als der Brechungsindex ($n_D$-$C_3$) der zweiten Pfropfhülle (C3) ist. Vorzugsweise ist der Brechungsindex ($n_D$-$C_2$) der ersten Pfropfhülle (C2) wenigstens um 2 %, insbesondere um wenigstens 3 %, größer als der Brechungsindex ($n_D$-$C_3$) der zweiten Pfropfhülle (C3).

In einer weiteren bevorzugten Ausführungsform sind die erfindungsgemäßen thermoplastischen Formmassen dadurch charakterisiert, daß der Brechungsindex ($n_D$-$C_2C_3$) der Gesamtpfropfhülle kleiner ist als der Brechungsindex ($n_D$-$C_1$) des Kerns (C1). Vorzugsweise ist der Brechungsindex ($n_D$-$C_2C_3$) der Gesamtpfropfhülle um wenigstens 0,1 %, insbesondere um wenigstens 1,0 % kleiner als der Brechungsindex ($n_D$-$C_1$) des Kerns (C1).

In einer weiteren bevorzugten Ausführungsform sind die erfindungsgemäßen thermoplastischen Formmassen dadurch charakterisiert, dass der Betrag der Differenz aus Brechungsindex ($n_D$-C) der Gesamtkomponente (C) und dem Brechungsindex ($n_D$-AB) der Gesamtmatrix der Komponenten (A) und (B) kleiner oder gleich 0,02, insbesondere kleiner oder gleich 0,015, ist.

In einer weiteren bevorzugten Ausführungsform sind die erfindungsgemäßen Formmassen darüber hinaus dadurch charakterisiert, dass der Betrag der Differenz zwischen dem Brechungsindex ($n_D$-$C_2C_3$) der Gesamtpfropfhülle des Pfropfcopolymerisats C und dem Brechungsindex ($n_D$-$C_1$) des Kerns (C1) kleiner als 0,06 ist. Die Formmassen gemäß dieser Ausführungsform zeichnen sich durch einen besonders niedrigen Kantengelbstich aus.

Die genannten Brechungsindices $n_D$ [dimensionslos] sind jeweils nach den im folgenden genannten Methoden zu bestimmen:

Die Brechungsindices ($n_D$-$C_1$), ($n_D$-C) und ($n_D$-AB) werden an Folien gemessen, die aus den jeweiligen Polymerkernen (C1), Polymeren (C) oder Polymermischungen aus den Komponenten (A) und (B) in einer IWK-Presse bei 200°C und einem Druck von 3 - 5 bar 2 min vorgepresst und abschließend bei 200°C und 200 bar 3 min nachgepresst werden. Die Messungen werden bei 20°C mit einem Abbé-Refraktometer nach der Methode zur Messung der Brechungsindizes bei festen Körpern durchgeführt (s. Ullmanns Encyklopädie der technischen Chemie, Band 2/1, S. 486, Herausgeber E. Foerst; Urban & Schwarzenberg, München-Berlin 1961).

Der Brechungsindex ($n_D$-$C_2$) werde inkrementell nach folgender Formel berechnet:

$$(n_D\text{–}C_2) = \sum_{i=1}^{n} [x_i^{C2} * (nD\text{-}M_i^{C2})] \;/\; \sum_{i=1}^{n} [x_i^{C2}]$$

wobei $x_i^{C2}$ die Gewichtsteile der die Pfropfhülle (C2) aufbauenden Monomerkomponente $M_i^{C2}$ sind, (nD-$M_i^{C2}$) das Brechungsindexinkrement der die Pfropfhülle (C2) aufbauenden Monomerkomponente $M_i^{C2}$ ist, und n die Anzahl voneinander verschiedener, die Pfropfhülle (C2) aufbauender Monomerkomponenten ist.

Der Brechungsindex ($n_D$-$C_3$) wird inkrementell nach folgender Formel berechnet:

$$(n_D\text{–}C_3) = \sum_{i=1}^{n} [x_i^{C3} * (nD\text{-}M_i^{C3})] \;/\; \sum_{i=1}^{n} [x_i^{C3}]$$

wobei $x_i^{C3}$ die Gewichtsteile der die Pfropfhülle (C3) aufbauenden Monomerkomponente $M_i^{C3}$ sind, (nD-$M_i^{C3}$) das Brechungsindexinkrement der die Pfropfhülle (C3) aufbauenden Monomerkomponente $M_i^{C3}$ ist, und n die Anzahl voneinander verschiedener, die Pfropfhülle (C3) aufbauender Monomerkomponenten ist.

Als Brechungsindexinkremente (nD-$M_i^{C2}$) bzw. (nD-$M_i^{C3}$) der die Pfropfhüllen (C2) bzw. (C3) aufbauenden Monomerkomponenten $M_i^{C2}$ bzw. $M_i^{C3}$ werden folgende Werte eingesetzt:

| | |
|---|---|
| Styrol: | 1,594 |
| Methylmethacrylat: | 1,495 |
| Butylacrylat: | 1,419 |
| Dihydrodicyclopentadienylacrylat: | 1,497 |
| Butandioldiacrylat: | 1,419 |
| Butylenglykoldimethacrylat: | 1,419 |

Der Brechungsindex ($n_D$-$C_2C_3$) der Gesamtpfropfhülle wurde nach folgender Formel berechnet:

$$(n_D\text{–}C_2C_3) = [y^{C2} * (n_D\text{-}C_2) + y^{C3} * (n_D\text{-}C_3)] \,/\, [y^{C2} + y^{C3}]$$

wobei $y^{C2}$ bzw. $y^{C3}$ die jeweiligen Gewichtsteile der die Gesamtpfropfhülle aufbauenden ersten Pfropfhülle (C2) bzw. zweiten Pfropfhülle (C3) sind, und die Brechungsindices ($n_D$-$C_2$) und ($n_D$-$C_3$) wie oben beschrieben bestimmt werden.

Komponente (D)

Die Komponente (D) ist ein hoch- oder hyperverzweigtes Polymer, ausgewählt aus

(D1) hoch- oder hyperverzweigten Polycarbonaten und

(D2) hoch- oder hyperverzweigten Polyestern des Typs $A_x + B_y$ wobei x mindestens 1,1 und y mindestens 2,1 beträgt.

Man kann entweder Polycarbonate (D1) oder Polyester (D2) oder beide Komponenten (D1) und (D2) verwenden. Sofern man Mischungen von (D1) und (D2) verwendet, beträgt das Mischungsverhältnis (D1) : (D2) in der Regel von 1 : 20 bis 20: 1, bevorzugt von 1 : 15 bis 15 : 1, insbesondere 1 : 5 bis 5 : 1, bezogen auf das Gewicht.

Das Merkmal "hoch- oder hyperverzweigt" im Zusammenhang mit Polymeren, Polycarbonaten bzw. Polyestern gemäß (D), (D1) bzw. (D2) bedeutet im Sinne der Erfindung, dass der Verzweigunsgrad DB (degree of branching) der betreffenden Stoffe, der definiert ist als

$$DB = \frac{T+Z}{T+Z+L} \times 100\%,$$

(wobei T die mittlere Anzahl der terminalen Monomereinheiten, Z die mittlere Anzahl der verzweigten Monomereinheiten und L die mittlere Anzahl der linearen Monomereinheiten in den Makromolekülen der jeweiligen Stoffe bedeuten) 10 bis 99.9 %, bevorzugt 20 bis 99 %, besonders bevorzugt 20 - 95 % beträgt.

Komponente (D1)

Unter hoch- oder hyperverzweigten Polycarbonaten (D1) werden im Rahmen dieser Erfindung unvernetzte Makromoleküle mit Hydroxyl- und Carbonatgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hoch- oder hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99.9 %, bevorzugt 20 bis 99 %, besonders bevorzugt 20 - 95 % beträgt.

Unter "dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30.

Vorzugsweise weist die Komponente (D1) ein Zahlenmittel des Molekulargewichtes $M_n$ von 100 bis 15000, vorzugsweise von 200 bis 12000 und insbesondere von 500 bis 10000 g/mol (GPC, Standard PMMA, Laufmittel Dimethylacetamid).

Die Glasübergangstemperatur Tg beträgt insbesondere von -80°C bis 140, vorzugsweise von -60 bis 120°C (gemäß DSC, DIN 53765).

Insbesondere beträgt die Viskosität (mPas) bei 23°C (gemäß DIN 53019) von 50 bis 200000, insbesondere von 100 bis 150000 und ganz besonders bevorzugt von 200 bis 100000.

Die Komponente (D1) ist vorzugsweise erhältlich durch ein Verfahren, welches mindestens die folgenden Schritte umfasst:

a) Umsetzung mindestens eines organischen Carbonats (I) der allgemeinen Formel RO(CO)OR mit mindestens einem aliphatischen Alkohol (II), welcher mindestens 3 OH-Gruppen aufweist, unter Eliminierung von Alkoholen ROH zu einem oder mehreren Kondensationsprodukten (K), wobei es sich bei R jeweils unabhängig voreinander um einen geradkettigen oder verzweigten aliphatischen, araliphatischen oder aromatischen Kohlenwasserstoffrest mit 1 bis 20 C-Atomen handelt, sowie

b) intermolekulare Umsetzung der Kondensationsprodukte (K) zu einem hochfunktionellen, hoch- oder hyperverzweigten Polycarbonat,

wobei das Mengenverhältnis der OH-Gruppen zu den Carbonaten im Reaktions-gemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

Bei den Resten R der als Ausgangsmaterial eingesetzten organischen Carbonate (I) der allgemeinen Formel RO(CO)OR handelt es sich jeweils unabhängig voneinander um einen geradkettigen oder verzweigten aliphatischen, araliphatischen oder aromatischen Kohlenwasserstoffrest mit 1 bis 20 C-Atomen handelt. Die beiden Reste R können auch unter Bildung eines Ringes miteinander verbunden sein. Bevorzugt handelt es sich um einen aliphatischen Kohlenwasserstoffrest und besonders bevorzugt um einen geradkettigen oder verzweigten Alkylrest mit 1 bis 5 C-Atomen.

Dialkyl- oder Diarylcarbonate können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder $NO_x$ hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate umfassen aliphatische oder aromatische Carbonate wie Ethylencarbonat, 1,2-

oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylacarbonat oder Didodecylcarbonat.

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Dipropylcarbonat, Dibutylcarbonat oder Diisobutylcarbonat.

Die organischen Carbonate werden mit mindestens einem aliphatischen Alkohol (II), welcher mindestens 3 OH-Gruppen aufweist, oder Gemischen zweier oder mehrerer verschiedener Alkohole, umgesetzt.

Beispiele für Verbindungen mit mindestens drei OH-Gruppen umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl) amin, Pentaerythrit, Bis(trimethylolpropan), Tetrahydroxyethylisocyanurat oder Zucker, wie zum Beispiel Glucose, tri- oder höherfunktionelle Polyetherole auf Basis tri- oder höherfunktioneller Alkohole und Ethylenoxid, Propylenoxid oder Butylenoxid, oder Polyesterole. Dabei sind Glycerin, Trimethylolethan, Trimethylolpropan, 1,2,4-Butantriol, Pentaerythrit, sowie deren Polyetherole auf Basis von Ethylenoxid oder Propylenoxid besonders bevorzugt.

Diese mehrfunktionellen Alkohole können auch in Mischung mit difunktionellen Alkoholen (II') eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2-und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Cyclopentandiol, Cyclohexandiol, Cyclohexandimethanol, difunktionelle Polyether- oder Polyesterole.

Die Reaktion des Carbonats mit dem Alkohol oder Alkoholgemisch zum erfindungsgemäßen hochfunktionellen hochverzweigten Polycarbonat erfolgt in der Regel unter Eliminierung des monofunktionellen Alkohols oder Phenols aus dem Carbonat-Molekül.

Die nach dem erfindungsgemäßen Verfahren gebildeten hochfunktionellen hochverzweigen Polycarbonate sind nach der Reaktion, also ohne weitere Modifikation, mit Hydroxylgruppen und/oder mit Carbonatgruppen terminiert. Sie lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens drei, bevorzugt mindestens sechs, mehr bevorzugt mindestens zehn funktionelle Gruppen aufweist. Bei den funktionellen Gruppen handelt es sich um Carbonatgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100 end oder seitenständige funktionelle Gruppen auf.

Bei der Herstellung der hochfunktionellen Polycarbonate (D1) ist es notwendig, das Verhältnis von den OH-Gruppen enthaltenden Verbindungen zu dem Carbonat so einzustellen, dass das resultierende einfachste Kondensationsprodukt (im weiteren Kondensationsprodukt (K) genannt) im Mittel entweder eine Carbonatgruppe und mehr als eine OH-Gruppe oder eine OH-Gruppe und mehr als eine Carbonatgruppe enthält. Die einfachste Struktur des Kondensationsproduktes (K) aus einem Carbonat (I) und einem Di- oder Polyalkohol (II) ergibt dabei die Anordnung $XY_n$ oder $Y_nX$, wobei X eine Carbonatgruppe, Y eine Hydroxyl-Gruppe und n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im folgenden generell "fokale Gruppe" genannt.

Liegt beispielsweise bei der Herstellung des einfachsten Kondensationsproduktes (K) aus einem Carbonat und einem zweiwertigen Alkohol das Umsetzungsverhältnis bei 1:1, so resultiert im Mittel ein Molekül des Typs XY, veranschaulicht durch die allgemeine Formel 1.

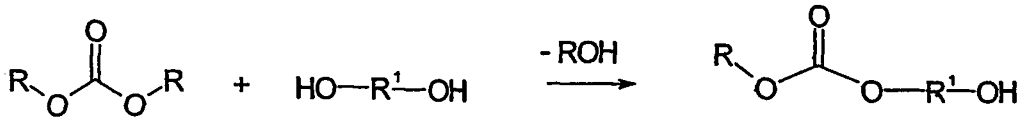


1

Bei der Herstellung des Kondensationsproduktes (K) aus einem Carbonat und einem dreiwertigen Alkohol bei einem Umsetzungsverhältnis von 1 : 1 resultiert im Mittel ein Molekül des Typs $XY_2$, veranschaulicht durch die allgemeine

Formel 2. Fokale Gruppe ist hier eine Carbonatgruppe.

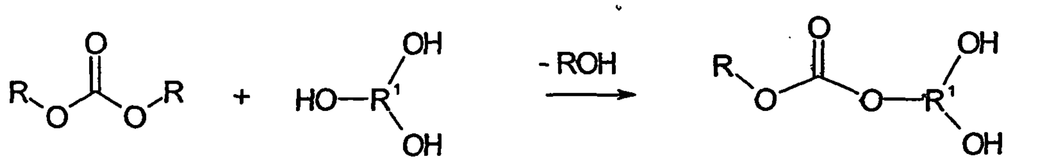


2

Bei der Herstellung des Kondensationsproduktes (K) aus einem Carbonat und einem vierwertigen Alkohol ebenfalls mit dem Umsetzungsverhältnis 1 : 1 resultiert im Mittel ein Molekül des Typs $XY_3$, veranschaulicht durch die allgemeine Formel 3. Fokale Gruppe ist hier eine Carbonatgruppe.

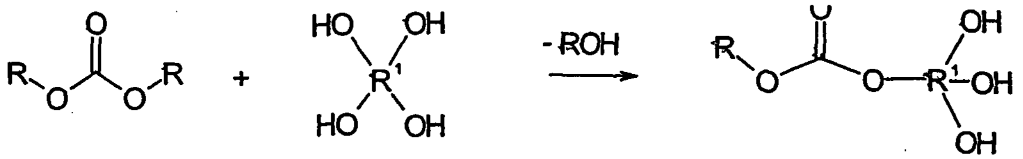


3

In den Formeln 1 bis 3 hat R die eingangs definierte Bedeutung und $R^1$steht für einen aliphatischen Rest.

Weiterhin kann die Herstellung des Kondensationsprodukts (K) zum Beispiel auch aus einem Carbonat und einem dreiwertigen Alkohol, veranschaulicht durch die allgemeine Formel 4, erfolgen, wobei das Umsetzungsverhältnis bei molar 2:1 liegt. Hier resultiert im Mittel ein Molekül des Typs $X_2Y$, fokale Gruppe ist hier eine OH-Gruppe. In der Formel 4 haben R und $R^1$ die gleiche Bedeutung wie in den Formeln 1 bis 3.

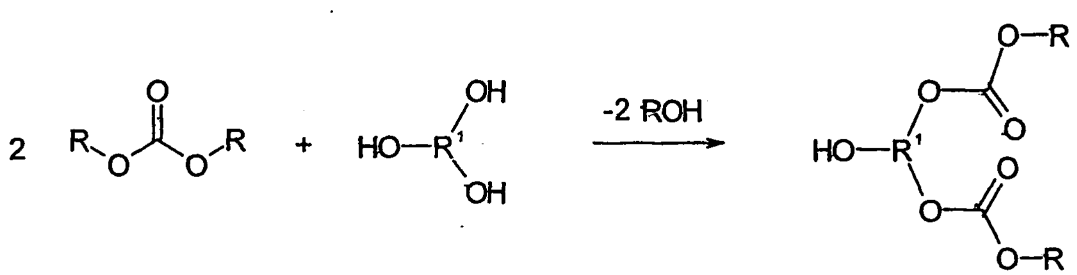


4

Werden zu den Komponenten zusätzlich difunktionelle Verbindungen, z.B ein Dicarbonat oder ein Diol gegeben, so bewirkt dies eine Verlängerung der Ketten, wie beispielsweise in der allgemeinen Formel 5 veranschaulicht. Es resultiert wieder im Mittel ein Molekül des Typs $XY_2$, fokale Gruppe ist eine Carbonatgruppe.

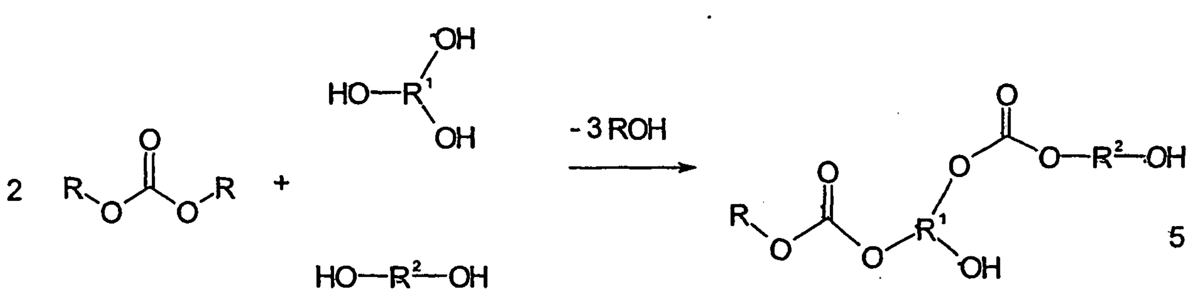


5

In Formel 5 bedeutet $R^2$ einen organischen, bevorzugt aliphatischen Rest, R und $R^1$ sind wie vorstehend beschrieben definiert.

Die beispielhaft in den Formeln 1 - 5 beschriebenen einfachen Kondensationsprodukte (K) reagieren erfindungsgemäß bevorzugt intermolekular unter Bildung von hochfunktionellen Polykondensationsprodukten, im folgenden Polykondensationsprodukte (P) genannt. Die Umsetzung zum Kondensationsprodukt (K) und zum Polykondensationsprodukt (P) erfolgt üblicherweise bei einer Temperatur von 0 bis 250 °C, bevorzugt bei 60 bis 160°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel Decan, Dodecan, Benzol, Toluol, Chlorbenzol, Xylol, Dimethylformamid, Dimethylacetamid oder Solventnaphtha.

In einer bevorzugten Ausführungsform wird die Kondensationsreaktion in Substanz durchgeführt. Der bei der Reaktion freiwerdende monofunktionelle Alkohol ROH oder das Phenol, kann zur Beschleunigung der Reaktion destillativ, gegebenenfalls bei vermindertem Druck, aus dem Reaktionsgleichgewicht entfernt werden.

Falls Abdestillieren vorgesehen ist, ist es regelmäßig empfehlenwert, solche Carbonate einzusetzen, welche bei der Umsetzung Alkohole ROH mit einem Siedepunkt von weniger als 140°C freisetzen.

Zur Beschleunigung der Reaktion können auch Katalysatoren oder Katalysatorgemische zugegeben werden. Geeignete Katalysatoren sind Verbindungen, die zum Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titan-tetrabutylat, Titantetraisopropylat, Dibutylzinnoxid, Dibutylzinn-dilaurat, Zinndioctoat, Zirkonacetylacetonat oder Gemische davon eingesetzt.

Die Zugabe des Katalysators erfolgt im allgemeinen in einer Menge von 50 bis 10000, bevorzugt von 100 bis 5000 Gew. ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum stabil.

Aufgrund der Beschaffenheit der Kondensationsprodukte (K) ist es möglich, daß aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonatgruppe als fokale Gruppe und mehr als zwei OH-Gruppen oder aber eine OH-Gruppe als fokale Gruppe und mehr als zwei Carbonatgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel 2 durch dreifache intermolekulare Kondensation zu zwei verschiedenen Polykondensationsprodukten (P), die in den allgemeinen Formeln 6 und 7 wiedergegeben werden, reagieren.

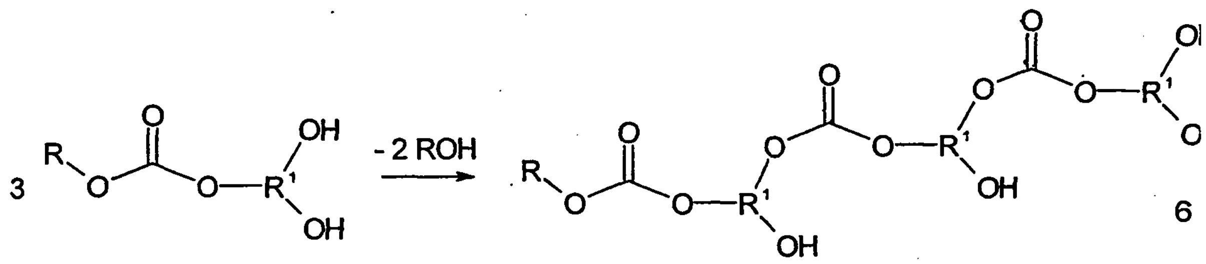


6

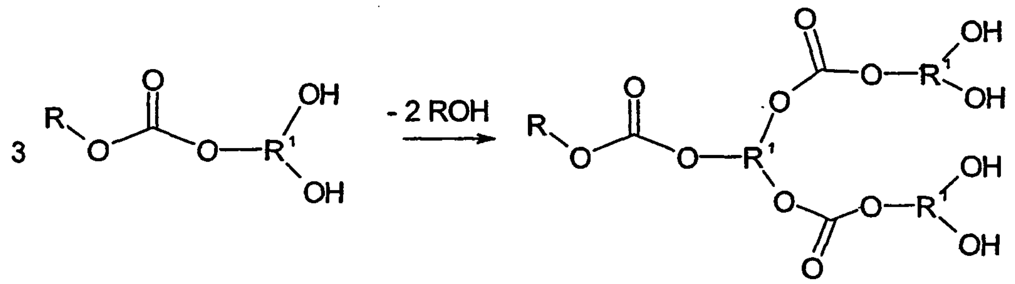

7

In Formel 6 und 7 sind R und $R^1$ wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden. So kann bei einer Carbonatgruppe als fokaler Gruppe zum Beispiel ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxydgruppen enthaltende Verbindung oder ein mit OH-Gruppen reaktives Säurederivat zugegeben werden.

Die Herstellung der erfindungsgemäßen hochfunktionellen Polycarbonate erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform können die erfindungsgemäßen Polycarbonate neben den bereits durch die Reaktion erhaltenden funktionellen Gruppen weitere funktionelle Gruppen erhalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionelle Elemente besitzen, so erhält man ein Polycarbonat-Polymer mit statistisch verteilten von den Carbonat-oder Hydroxylgruppen verschiedenen Funktionalitäten.

Derartige Effekte lassen sich zum Beispiel durch Zusatz von Verbindungen während der Polykondensation erzielen, die neben Hydroxylgruppen oder Carbonatgruppen weitere funktionelle Gruppen oder funktionelle Elemente, wie Mercaptogruppen, primäre, sekundäre oder tertiäre Aminogruppen, Ethergruppen, Derivate von Carbonsäuren, Derivate von Sulfonsäuren, Derivate von Phosphonsäuren, Silangruppen, Siloxangruppen, Arylreste oder langkettige Alkylreste tragen. Zur Modifikation mittels Carbamat-Gruppen lassen sich beispielsweise Ethanolamin, Propanolamin, Isopropanoiamin, 2-(Butylamino)ethanol, 2-(Cyclohexylamino)ethanol, 2-Amino-1-butanol, 2-(2'-Amino-ethoxy)ethanol oder höhere Alkoxylierungsprodukte des Ammoniaks, 4-Hydroxypiperidin, 1-Hydroxyethylpiperazin, Diethanolamin, Dipropanolamin, Diisopropanolamin, Tris(hydroxymethyl)aminomethan, Tris(hydroxyethyl)aminomethan, Ethylendiamin, Propylendiamin, Hexamethylendiamin oder Isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von N-Methyldiethanolamin, N-Methyldipropanolamin oder N,N-Dimethylethanolamin erzeugen.

Ethergruppen können zum Beispiel durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen aufweisende Polycarbonate.

Eine nachträgliche Funktionalisierung kann man erhalten, indem das erhaltene hochfunktionelle, hoch- oder hyperverzweigte Polycarbonat in einem zusätzlichen Verfahrensschritt (Schritt c)) mit einem geeigneten Funktionalisierungsreagenz, welches mit den OH- und/oder Carbonat-Gruppen des Polycarbonates reagieren kann, umsetzt.

Hydroxylgruppen enthaltende hochfunktionelle, hoch oder hyperverzweigte Polycarbonate können zum Beispiel durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten.

Weiterhin können Hydroxylgruppen enthaltende hochfunktionelle Polycarbonate auch durch Umsetzung mit

Alkylenoxiden, zum Beispiel Ethylenoxid, Propylenoxid oder Butylenoxid, in hochfunktionelle Polycarbonat-Polyetherpolyole überführt werden.

Ein großer Vorteil des Verfahrens zur Herstellung von (D1) liegt in seiner Wirtschaftlichkeit. Sowohl die Umsetzung zu einem Kondensationsprodukt (K) oder Polykondensationsprodukt (P) als auch die Reaktion von (K) oder (P) zu Polycarbonaten mit anderen funktionellen Gruppen oder Elementen kann in einer Reaktionsvorrichtung erfolgen, was technisch und wirtschaftlich vorteilhaft ist.

Komponente (D2)

Als Komponente (D2) enthalten die erfindungsgemäßen Polymerblends mindestens einen hoch- oder hyperverzweigten Polyester des Typs $A_x + B_y$, wobei

x mindestens 1,1 vorzugsweise mindestens 1,3, insbesondere mindestens 2
y mindestens 2,1., vorzugsweise mindestens 2,5, insbesondere mindestens 3

beträgt.

Selbstverständlich können als Einheiten A bzw. B auch Mischungen eingesetzt werden, wobei x und y dann den mittleren Zahlenwert, dass heißt die mittlere Funktionalität in der Mischung ergeben.

Unter einem Polyester des Typs $A_x + B_y$ versteht man ein Kondensat, das sich aus einem x-funktionellen Molekül A und einem y-funktionellen Molekül B aufbaut. Beispielsweise sei genannt ein Polyester aus Adipinsäure als Molekül A (x = 2) und Glycerin als Molekül B (y = 3).

Unter hoch- oder hyperverzweigten Polyestern (D2) werden im Rahmen dieser Erfindung unvernetzte Makromoleküle mit Hydroxyl- und Carboxylgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hoch- oder hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99.9 %, bevorzugt 20 bis 99 %, besonders bevorzugt 20 - 95 % beträgt.

Unter "dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30.

Die Komponente (D2) weist vorzugsweise ein $M_n$ von 300 bis 30 000, insbesondere von 400 bis 25000 und ganz besonders von 500 bis 20000 g/mol auf, bestimmt mittels GPC, Standard PMMA, Laufmittel Dimethylacetamid.

Vorzugsweise weist (D2) eine OH-Zahl von 0 bis 600, vorzugsweise 1 bis 500, insbesondere von 20 bis 500 mg KOH/g Polyester gemäß DIN 53240 auf sowie bevorzugt eine COOH-Zahl von 0 bis 600, vorzugsweise von 1 bis 500 und insbesondere von 2 bis 500 mg KOH/g Polyester.

Die $T_g$ beträgt vorzugsweise von -50°C bis 140°C und insbesondere von -50 bis 100°C (mittels DSC, nach DIN 53765).

Insbesondere solche Komponenten (D2) sind bevorzugt, in denen mindestens eine OH- bzw. COOH-Zahl größer 0, vorzugsweise größer 0,1 und insbesondere größer 0,5 ist.

Insbesondere durch die nachfolgend beschriebenen Verfahren ist die erfindungsgemäße Komponente (D2) erhältlich, und zwar indem man

(a) eine oder mehrere Dicarbonsäuren oder eines oder mehrere Derivate derselben mit einem oder mehreren trifunktionellen Alkoholen
oder

(b) eine oder mehrere Tricarbonsäuren oder höhere Polycarbonsäuren oder eines oder mehrere Derivate derselben mit einem oder mehreren Diolen

in Gegenwart eines Lösemittels und optional in Gegenwart eines anorganischen, metallorganischen oder niedermolekularen organischen Katalysators oder eines Enzyms umsetzt. Die Umsetzung im Lösungsmittel ist die bevorzugte Herstellmethode.

Hochfunktionelle hyperverzweigte Polyester (D2) im Sinne der vorliegenden Erfindung sind molekular und strukturell uneinheitlich. Sie unterscheiden sich durch ihre molekulare Uneinheitlichkeit von Dendrimeren und sind daher mit erheblich geringerem Aufwand herzustellen.

Zu den nach Variante (a) umsetzbaren Dicarbonsäuren gehören beispielsweise Oxalsäure, Malonsäure, Bernsteinsäure, Glutarsäure, Adipinsäure, Pimelinsäure, Korksäure, Azelainsäure, Sebacinsäure, Undecan-a,w-dicarbonsäure, Dodecan-a,w-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure sowie cis- und trans-Cyclopentan-1,3-dicarbonsäure,
wobei die oben genannten Dicarbonsäuren substituiert sein können mit einem oder mehreren Resten, ausgewählt aus $C_1$-$C_{10}$-Alkylgruppen, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n--Octyl, 2-Ethylhexyl, n-Nonyl oder n-Decyl,
$C_3$-$C_{12}$-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
Alkylengruppen wie Methylen oder Ethyliden oder
$C_6$-$C_{14}$-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, Itaconsäure, 3,3-Dimethylglutarsäure.

Weiterhin gehören zu den nach Variante (a) umsetzbaren Dicarbonsäuren ethylenisch ungesättigte Säuren wie beispielsweise Maleinsäure und Fumarsäure sowie aromatische Dicarbonsäuren wie beispielsweise Phthalsäure, Isophthalsäure oder Terephthalsäure.

Weiterhin lassen sich Gemische von zwei oder mehreren der vorgenannten Vertreter einsetzen.

Die Dicarbonsäuren lassen sich entweder als solche oder in Form von Derivaten einsetzen.

Unter Derivaten werden bevorzugt verstanden

- die betreffenden Anhydride in monomerer oder auch polymerer Form,
- Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester,
- ferner Mono- und Divinylester sowie
- gemischte Ester, bevorzugt Methylethylester.

Im Rahmen der bevorzugten Herstellung ist es auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.

Besonders bevorzugt setzt man Bernsteinsäure, Glutarsäure, Adipinsäure, Phthalsäure, Isophthalsäure, Terephthalsäure oder deren Mono- oder Dimethylester ein. Ganz besonders bevorzugt setzt man Adipinsäure ein.

Als mindestens trifunktionelle Alkohole lassen sich beispielsweise umsetzen: Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, Trimethylolbutan, Trimethylolpropan oder Di-Trimethylolpropan, Trimethylolethan, Pentaerythrit oder Dipentaerythrit; Zuckeralkohole wie beispielsweise Mesoerythrit, Threitol, Sorbit, Mannit oder Gemische der vorstehenden mindestens trifunktionellen Alkohole. Bevorzugt verwendet man Glycerin, Trimethylolpropan, Trimethylolethan und Pentaerythrit.

Nach Variante (b) umsetzbare Tricarbonsäuren oder Polycarbonsäuren sind beispielsweise 1,2,4-Benzoltricarbonsäure, 1,3,5-Benzoltricarbonsäure, 1,2,4,5-Benzoltetracarbonsäure sowie Mellitsäure.

Tricarbonsäuren oder Polycarbonsäuren lassen sich in der erfindungsgemäßen Reaktion entweder als solche oder aber in Form von Derivaten einsetzen.

Unter Derivaten werden bevorzugt verstanden

- die betreffenden Anhydride in monomerer oder auch polymerer Form,
- Mono-, Di- oder Trialkylester, bevorzugt Mono-, Di- oder Trimethylester oder die entsprechenden Mono-, Di- oder Triethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- Di- und Triester, ferner Mono-, Di- oder Trivinylester
- sowie gemischte Methylethylester.

Im Rahmen der vorliegenden Erfindung ist es auch möglich, ein Gemisch aus einer Tri- oder Polycarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Tri- oder Polycarbonsäuren einzusetzen, um Komponente (D2) zu erhalten.

Als Diole für Variante (b) verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol, 1,7-Heptandiol, 1,8-Octandiol, 1,2-Octandiol, 1,9-Nonandiol, 1,10-Decandiol, 1,2-Decandiol, 1,12-Dodecandiol, 1,2-Dodecandiol, 1,5-Hexadien-3,4-diol, Cyclopentandiole, Cyclohexandiole, Inositol und Derivate, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole $HO(CH_2CH_2O)_n$-H oder Polypropylenglykole $HO(CH[CH_3]CH_2O)_n$-H oder Gemische von zwei oder mehr Vertretern der voranstehenden Verbindungen, wobei n eine ganze Zahl ist und n = 4. Dabei kann eine oder auch beide Hydroxylgruppen in den vorstehend genannten Diolen auch durch SH-Gruppen substituiert werden. Bevorzugt sind Ethylenglykol, Propan-1,2-diol sowie Diethylenglykol, Triethylenglykol, Dipropylenglykol und Tripropylenglykol.

Die Molverhältnis der Moleküle A zu Molekülen B im $A_x$ + $B_y$-Polyester bei den Varianten (a) und (b) beträgt 4:1 bis 1:4, insbesondere 2:1 bis 1:2.

Die nach Variante (a) des Verfahrens umgesetzten mindestens trifunktionellen Alkohole können Hydroxylgruppen jeweils gleicher Reaktivität aufweisen. Bevorzugt sind hier auch mindestens trifunktionelle Alkohole, deren OH-Gruppen zunächst gleich reaktiv sind, bei denen sich jedoch durch Reaktion mit mindestens einer Säuregruppe ein Reaktivitätsabfall, bedingt durch sterische oder elektronische Einflüsse, bei den restlichen OH-Gruppen induzieren lässt. Dies ist beispielsweise bei der Verwendung von Trimethylolpropan oder Pentaerythrit der Fall.

Die nach Variante (a) umgesetzten mindestens trifunktionellen Alkohole können aber auch Hydroxylgruppen mit mindestens zwei chemisch unterschiedlichen Reaktivitäten aufweisen.

Die unterschiedliche Reaktivität der funktionellen Gruppen kann dabei entweder auf chemischen (z.B. primäre/sekundäre/tertiäre OH Gruppe) oder auf sterischen Ursachen beruhen.

Beispielsweise kann es sich bei dem Triol um ein Triol handeln, welches primäre und sekundäre Hydroxylgruppen aufweist, bevorzugtes Beispiel ist-Glycerin.

Bei der Durchführung der erfindungsgemäßen Umsetzung nach Variante (a) arbeitet man bevorzugt in Abwesenheit von Diolen und monofunktionellen Alkoholen.

Bei der Durchführung der erfindungsgemäßen Umsetzung nach Variante (b) arbeitet man bevorzugt in Abwesenheit von mono- oder Dicarbonsäuren.

Das Verfahren wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01- bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauern führt.

Zur Durchführung des erfindungsgemäß bevorzugten Verfahrens kann man in-Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, $MgSO_4$ und $Na_2SO_4$. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen.

Man kann das Verfahren in Abwesenheit von sauren Katalysatoren durchführen. Vorzugsweise arbeitet man in Gegenwart eines sauren anorganischen, metallorganischen oder organischen Katalysators oder Gemischen aus mehreren sauren anorganischen, metallorganischen oder organischen Katalysatoren.

Als saure anorganische Katalysatoren im Sinne der vorliegenden Erfindung sind beispielsweise Schwefelsäure, Phosphorsäure, Phosphonsäure, hypophosphorige Säure, Aluminiumsulfathydrat, Alaun, saures Kieselgel (pH = 6, insbesondere = 5) und saures Aluminiumoxid zu nennen. Weiterhin sind beispielsweise Alumiumverbindungen der allgemeinen Formel $Al(OR)_3$ und Titanate der allgemeinen Formel $Ti(OR)_4$ als saure anorganische Katalysatoren einsetzbar, wobei die Reste R jeweils gleich oder verschieden sein können und unabhängig voneinander gewählt sind aus

$C_1$-$C_{10}$-Alkylresten, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,

$C_3$-$C_{12}$-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R in $Al(OR)_3$ bzw. $Ti(OR)_4$ jeweils gleich und gewählt aus Isopropyl oder 2-Ethylhexyl.

Bevorzugte saure metallorganische Katalysatoren sind beispielsweise gewählt aus Dialkylzinnoxiden $R_2SnO$, wobei R wie oben stehend definiert ist. Ein besonders bevorzugter Vertreter für saure metallorganische Katalysatoren ist Di-n-butylzinnoxid, das als sogenanntes Oxo-Zinn kommerziell erhältlich ist, oder Di-n-butylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise Sulfonsäuregruppen-haltige Polystyrolharze, die mit etwa 2 mol% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form einzusetzen.

Wünscht man saure anorganische, metallorganische oder organische Katalysatoren einzusetzen, so setzt man erfindungsgemäß 0,1 bis 10 Gew.-%, bevorzugt 0,2 bis 2 Gew.-% Katalysator ein.

Das Verfahren zu Herstellung von (D2) wird üblicherweise unter Inertgasatmosphäre durchgeführt, das heißt beispielsweise unter Kohlendioxid, Stickstoff oder Edelgas, unter denen insbesondere Argon zu nennen ist.

Das Verfahren wird in der Regel bei Temperaturen von 60 bis 200°C durchgeführt. Vorzugsweise arbeitet man bei Temperaturen von 130 bis 180, insbesondere bis 150°C oder darunter. Besonders bevorzugt sind maximale Temperaturen bis 145°C, ganz besonders bevorzugt bis 135°C.

Die Druckbedingungen des Verfahrens sind an sich unkritisch. Man kann bei deutlich verringertem Druck arbeiten, beispielsweise bei 10 bis 500 mbar. Das erfindungsgemäße Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei Atmosphärendruck.

Die Umsetzungsdauer des Verfahrens beträgt üblicherweise 10 Minuten bis 25 Stunden, bevorzugt 30 Minuten bis 10 Stunden und besonders bevorzugt eine bis 8 Stunden.

Nach beendeter Reaktion lassen sich die hochfunktionellen hyperverzweigten Polyester leicht isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Weiterhin kann die Komponente (D2) in Gegenwart von Enzymen oder Zersetzungsprodukten von Enzymen hergestellt werden (gemäß DE-A 10163163). Es gehören die erfindungsgemäß umgesetzten Dicarbonsäuren nicht zu den sauren organischen Katalysatoren im Sinne der vorliegenden Erfindung.

Bevorzugt ist die Verwendung von Lipasen oder Esterasen. Gut geeignete Lipasen und Esterasen sind Candida cylindracea, Candida lipolytica, Candida rugosa, Candida antarctica, Candida utilis, Chromobacterium viscosum, Geolrichum viscosum, Geotrichum candidum, Mucor javanicus, Mucor mihei, pig pancreas, pseudomonas spp., pseudomonas fluorescens, Pseudomonas cepacia, Rhizopus arrhizus, Rhizopus delemar, Rhizopus niveus, Rhizopus oryzae, Aspergillus niger, Penicillium roquefortii, Penicillium camembertii oder Esterase von Bacillus spp. und Bacillus thermoglucosidasius. Besonders bevorzugt ist Candida antarctica Lipase B. Die aufgeführten Enzyme sind kommerziell erhältlich, beispielsweise bei Novozymes Biotech Inc., Dänemark.

Bevorzugt setzt man das Enzym in immobilisierter Form ein, beispielsweise auf Kieselgel oder Lewatit®. Verfahren zur Immobilisierung von Enzymen sind an sich bekannt, beispielsweise aus Kurt Faber, "Biotransformations in organic chemistry", 3. Auflage 1997, Springer Verlag, Kapitel 3.2 "Immobilization" Seite 345-356. immobilisierte Enzyme sind kommerziell erhältlich, beispielsweise bei Novozymes Biotech Inc., Dänemark.

Die Menge an immobilisiertem eingesetztem Enzym beträgt 0,1 bis 20 Gew.-%, insbesondere 10 bis 15 Gew.-%, bezogen auf die Masse der insgesamt eingesetzten umzusetzenden Ausgangsmaterialien.

Bei Verwendung von Enzymen wird das Verfahren üblicherweise bei Temperaturen über 60°C durchgeführt. Vorzugsweise arbeitet man bei Temperaturen von 100°C oder darunter. Bevorzugt sind Temperaturen bis 80°C, ganz besonders bevorzugt von 62 bis 75°C und noch mehr bevorzugt von 65 bis 75°C.

Das Verfahren wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt mindestens 5 Gew.-Teile, bezogen auf die Masse der eingesetzten umzusetzenden Ausgangsmaterialien, bevorzugt mindestens 50 Gew.-Teile und besonders bevorzugt mindestens 100 Gew.-Teile. Mengen von über 10 000 Gew.-Teile Lösemittel sind nicht erwünscht, weil bei deutlich niedrigeren Konzentrationen die Reaktionsgeschwindigkeit deutlich nachlässt, was zu unwirtschaftlichen langen Umsetzungsdauern führt.

Das Verfahren wird bei Drücken oberhalb von 500 mbar durchgeführt. Bevorzugt ist die Umsetzung bei Atmosphärendruck oder leicht erhöhtem Druck, beispielsweise bis 1200 mbar. Man kann auch unter deutlich erhöhtem Druck arbeiten, beispielsweise bei Drücken bis 10 bar. Bevorzugt ist die Umsetzung bei Atmosphärendruck.

Die Umsetzungsdauer des enzymkatalysierten Verfahrens beträgt üblicherweise 4 Stunden bis 6 Tage, bevorzugt 5 Stunden bis 5 Tage und besonders bevorzugt 8 Stunden bis 4 Tage.

Nach beendeter Reaktion lassen sich die hochfunktionellen hyperverzweigten Polyester isolieren, beispielsweise durch Abfiltrieren des Enzyms und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Die nach dem Verfahren erhältlichen hochfunktionellen, hyperverzweigten Polyester (D2) zeichnen sich durch besonders geringe Anteile an Verfärbungen und Verharzungen aus.

Die erfindungsgemäßen Polyester (D2) haben ein Molekulargewicht $M_w$ von 500 bis 50 000 g/mol, bevorzugt 1000 bis 20 000, besonders bevorzugt 1000 bis 19 000. Die Polydispersität beträgt 1,2 bis 50, bevorzugt 1,4 bis 40, besonders bevorzugt 1,5 bis 30 und ganz besonders bevorzugt 1,5 bis 10. Sie sind üblicherweise gut löslich, d.h. man kann klare Lösungen mit bis zu 50 Gew.-%, in einigen Fällen sogar bis zu 80 Gew.-%, der erfindungsgemäßen Polyester in Tetrahydrofuran (THF), n-Butylacetat, Ethanol und zahlreichen anderen Lösemitteln darstellen, ohne dass mit bloßem Auge Gelpartikel detektierbar sind.

Die erfindungsgemäßen hochfunktionellen hyperverzweigten Polyester (D2) sind carboxyterminiert, carboxy- und Hydroxylgruppen-terminiert und vorzugsweise Hydroxylgruppen-terminiert.

Komponente (E)

Als übliche Zusatzstoffe (E) kommen alle solchen Substanzen in Betracht, die sich in den Komponenten (A), (B), (C) und D gut lösen, beziehungsweise mit diesen gut mischbar sind. Geeignete Zusatzstoffe sind u.a. Farbstoffe, Stabilisatoren, Schmiermittel und Antistatika. Solche Zusatzstoffe und deren Herstellung sind dem Fachmann bekannt und in der Literatur beschrieben.

Die Herstellung der erfindungsgemäßen Formmassen aus den Komponenten (A), (B), (C), (D) und gewünschtenfalls (E) erfolgt nach dem Fachmann bekannten Verfahren, beispielsweise durch Mischen der Komponenten in der Schmelze mit dem Fachmann bekannten Vorrichtungen bei Temperaturen im Bereich von 200 bis 300°C, insbesondere bei 200 bis 280°C. Die Komponenten können in jeweils reiner Form den Mischvorrichtungen zugeführt werden. Es können aber auch einzelne Komponenten, beispielsweise (A) und (B), zuerst vorgemischt und anschließend mit den anderen Komponenten, beispielsweise (C), (D) und ggf. (E), vermischt werden. Bevorzugt wird zuerst ein Konzentrat der Komponente (D) in einer der Komponenten (A) oder (B) oder in einem Gemisch der Komponenten (A) und (B) hergestellt (sogenannte Additiv-Batches) und anschließend mit den gewünschten Mengen der restlichen Komponenten vermischt.

Aus den erfindungsgemäßen thermoplastischen Formmassen können nach dem Fachmann bekannten Verfahren Formkörper, Fasern, Folien oder Schäume hergestellt werden. Bevorzugt können durch Spritzgießen oder durch Formblasen Formteile hergestellt werden. Die thermoplastischen Formmassen können aber auch verpresst, kalandriert, extrudiert oder vakuumgeformt werden.

Die erfindungsgemäßen thermoplastischen Formmassen zeichnen sich insbesondere durch eine verbesserte Fließfähigkeit bei ansonsten vergleichbar guten mechanischen und optischen Eigenschaften aus.

Die hoch- oder hyperverzweigten Polymere, die als Komponente (D) in den erfindungsgemäßen thermoplastischen Formmassen eingesetzt werden, eignen sich erfindungsgemäß als Entformungshilfsmittel für grundsätzlich alle thermoplastische Formmassen. Bevorzugt eignen sie sich als Entformungshilfsmittel für thermoplastische Formmassen enthaltend harte Methylmethacrylat-Polymerisate, harte Vinylaromat-Vinylcyanid-Polymerisate und weiche Pfropfcopolymerisate umfassend einen kautschukelastischen Pfropfkern.

Beispiele

In den nachfolgenden erfindungsgemäßen Beispielen und den Vergleichsbeispielen wurden jeweils thermoplastische Formmassen hergestellt und folgende Eigenschaften ermittelt:

Quellungsindex QI [dimensionslos]:

Der Quellungsindex QI des Pfropfkernpolymerisats (C1) wurde an Folien gemessen, die durch Trocknen der bei der im folgenden noch beschriebenen Herstellung der Kautschukkerne (C1) anfallenden Dispersion bei 50°C und 700-800 mbar über Nacht erhalten wurden.

Ein Stück der jeweiligen Folien wurde mit Toluol versetzt. Nach 24 Stunden wurde dekantiert und die gequollene Folie gewogen. Die gequollene Folie wurde im Vakuum bei bis zu 120°C bis zur Gewichtskonstanz getrocknet und wiederum gewogen. Der Quellungsindex ergibt sich als Quotient aus dem Gewicht der gequollenen Folie und dem Gewicht der getrockneten Folie.

Schlagzähigkeit $a_n$ [kJ/m$^2$]:

Die Schlagzähigkeit $a_n$ wurde gemäß ISO 179-2/1eU bei 23°C bestimmt.

Kerbschlagzähigkeit $a_k$ [kJ/m$^2$]:

Die Kerbschlagzähigkeit $a_k$ wurde gemäß ISO 179-2/1eA(F) bei 23°C bestimmt.

Durchstoßfestigkeit DS [Nm]:

Die Durchstoßfestigkeit DS wurde gemäß ISO 6603-2/40/20/C bei 23°C an Platten mit einer Dicke von 2 mm bestimmt.

Fließfähigkeit MVR [ml/10 min]:

Als Maß für die Fließfähigkeit wurde die Melt-Volume-Rate MVR 220/10 gemäß DIN EN ISO 1133 bestimmt.

Wärmeformbeständigkeit Vicat B50 [°C]:

Die Wärmeformbeständigkeit Vicat B50 wurde gemäß ISO 306: 1994 bestimmt.

Entformungskraft [N]:

Die Entformungskraft wurde bestimmt auf einer Spritzgussmaschine Allrounder 270 E/16 mit einem Schneckendurchmesser von 18 mm der Fa. Arburg. Als Spritzform diente eine Entformungshülse, welche ein zylindrisches Bauteil mit Boden darstellt, das zentral von einem Auswerfer im Bodenbereich entformt wird. Die Kraftmessung erfolgt über einen mit dem Auswerfer verbundenen Kraftmesser. Die zylindrische Entformungshülse hat folgende Maße: Volumen 1cm$^3$, Durchmesser 14 mm, Höhe 14 mm, Wanddicke 1 mm, Volumen 1cm$^3$, Angußart: Tunnel.

Folgende Verarbeitungsbedingungen wurden eingestellt:

Schneckendrehzahl: 10 Upm; Schneckenvorlaufgeschw.: 60 mm/sec; Einspritzzeit: 0,45 sec; Einspritzdruck: 750 bar; Nachdruckzeit: 3 sec; Nachdruck: 200 bar; Staudruck: 50 bar; Dosierzeit: 1,7 sec; Kühlzeit: 22 sec; Einspritztemperatur: 250°C; Entformungstemperatur: 60°C.

Schmelzeviskosität [Pa s]

Die Schmelzeviskosität wurde mit einem Hochdruck-Kapillarrheometer (Rheograph 2003) der Fa. Göttfert bestimmt. Das länge/Radius-Verhältnis der Düse betrug 60 bei einem Radius von 0,5 mm. Messtemperaturen waren 220°C bzw. 250°C. Die Messzeit und die Vorheizzeit waren 5 min. Die Proben wurden 4 Std. bei 80°C in Vakuum vorgetrocknet. Viskosität und Scherrate sind scheinbare Werte, da keine Korrektur des Einlaufdruckverlustes und der Strukturviskosität vorgenommen wurde. Die Scherrate sowie die Viskosität wurden als scheinbare Werte mit nachfolgenden Gleichungen bestimmt. Scherrate und Schubspannung beziehen sich auf die Düsenwand.

Scheinb. Wandscherrate:

$$D = \frac{4\dot{V}}{\pi R^3}$$

Scheinb. Wandschubspannung:

$$\tau = \frac{p}{2(L/R)}$$

Scheinb. Viskosität:

$$\eta = \frac{\tau}{D} = \frac{\pi R^4 p}{8\dot{V}L} \quad .$$

mit p = Extrusionsdruck, R = Düsenradius, L = Düsenlänge, V_punkt = Volumendurchsatz

Transmission [%]:

Die Transmission wurde gemäß DIN 53236 an Platten mit einer Dicke von 2 mm bestimmt.

Yellowness-Index YI [dimensionslos]:

Der Gelbindex (Gelbstich) oder Yellowness-index YI wurde gemäß ASTM D 1925-70 C/10° bestimmt.

Teilchengröße $D_{50}$ [nm]:

Die mittlere Teilchengröße und die Teilchengrößenverteilung der Pfropfcopolymerisat-Kerne (C1) wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $D_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $D_{50}$-Wert entspricht. Ebenso haben dann 50 Gew.-% der Teilchen einen größeren Durchmesser als der $D_{50}$-Wert.

Einsatzstoffe:

Als Komponente A wurde ein Copolymerisat aus 95,5 Gew.-% Methylmethacrylat und 4,5 Gew.-% Methylacrylat mit einer Viskositätszahl VZ von 70 ml/g eingesetzt (bestimmt als 0,5 gew.-%-ige Lösung in Dimethylformamid bei 23°C nach DIN 53727).

Als Komponente B wurde ein Copolymerisat aus 81 Gew.-% Styrol und 19 Gew.-% Acrylnitril mit einer Viskositätszahl VZ von 60 ml/g eingesetzt (bestimmt als 0,5 gew.-%-ige Lösung in Dimethylformamid bei 23°C nach DIN 53727).

Die Komponenten C wurden wie folgt hergestellt:

In einer ersten Stufe wurden Pfropfkerne C1 hergestellt, indem jeweils eine Lösung aus 186 Gew.-Teilen Wasser, 0,36 Gew.-Teilen Natriumbicarbonat, 0,30 Gew.-Teilen Kaliumperoxodisulfat und 0,55 Gew.-Teilen Kaliumstearat zunächst mit Stickstoff inertisiert und auf 70°C temperiert wurde. Anschließend wurden unter Rühren innerhalb von 5 h eine Mischung aus 1 Gew.-Teil tert.-Dodecylmercaptan und 100 Gew.-Teilen einer Mischung aus 73 Gew.-% Butadien und 27 Gew.-% Styrol (Gew.-% jeweils bezogen auf das Gesamtgewicht von Butadien und Styrol) zugegeben. Man polymerisierte bis zu einem Umsatz von mindestens 95 %.

Die so erhaltenen Pfropfkerne C1 wiesen einen mittleren Teilchendurchmesser $D_{50}$ von 130 nm und einen Quellungsindex QI von 23 auf.

Aus den in der ersten Stufe erhaltenen Reaktionsmischungen enthaltend die Pfropf kerne C1 wurden jeweils durch zweistufige Pfropfcopolymerisation in der nachfolgend beschriebenen Weise die Pfropfcopolymerisate C hergestellt.

Dabei wurden folgende Abkürzungen verwendet.

| | |
|---|---|
| S | Styrol |
| MMA | Methylmethacrylat |
| DCPA | Dihydrodicyclopentadienylacrylat |
| BA | Butylacrylat |

Eine in der ersten Stufe erhaltene Reaktionsmischung enthaltend 80 Gew.-Teile Pfropfkerne C1 wurde vorgelegt und mit Stickstoff inertisiert. Anschließend fügte man jeweils 0,1 Gew.-Teile Kaliumstearat und 0,04 Gew.-Teile Kaliumperoxodisulfat in 10 Gew.-Teilen Wasser hinzu. Diese Mischung wurde jeweils bei 70°C innerhalb von 1,5 h mit 10 Gew.-Teilen einer Mischung der die erste Pfropfhülle C2 aufbauenden Monomere versetzt, wobei die letztgenannte Mischung aus 32,7 Gew.-Teilen S, 65,3 Gew.-Teilen MMA und 2 Gew.-Teilen DCPA bestand. Nach Zulaufende wurde die Polymerisation zum Aufbau der ersten Pfropfhülle C2 15 min fortgesetzt.

Zu den so erhaltenen Reaktionsmischungen wurden jeweils innerhalb von 1,5 h 10 Gew.-Teile einer Mischung der die zweite Pfropfhülle C3 aufbauenden Monomere zugegeben, wobei die letztgenannte Mischung jeweils aus 85 Gew.-Teilen MMA und 15 Gew.-Teilen BA bestand. Die Polymerisation wurde zum Aufbau derzweiten Pfropfhülle C3 anschließend 60 Minuten lang fortgesetzt. Anschließend fügte man jeweils weitere 0,04 Gew.-Teile Kaliumperoxodisulfat in 10 Gew.-Teilen Wasser hinzu und polymerisierte 1,5 h nach.

Das so erhaltene Pfropfcopolymerisat C wurden danach durch Fällung mit einer 1 gew.-%igen Magnesiumsulfatlösung isoliert, mit Wasser gewaschen und filtriert. Die Restfeuchte bezogen auf das Gesamtgewicht des Pfropfcopolymerisats betrug 21,1 Gew.-%.

Die Komponenten D wurden wie folgt hergestellt:

Hyperverzweigtes Polycarbonat (D1)

In einem Dreihalskolben, ausgestattet mit Rührer, Rückflusskühler und Innenthermometer wurde (gemäß Tabelle 1) 1 mol des mehrfunktionellen Alkohols mit 1 mol Diethylcarbonat gemischt und 250 ppm, bezogen auf den Alkohol, $K_2CO_3$ (Beispiel D1-a) bzw. KOH (Beispiele D1-b) als Katalysator zugegeben. Die Mischung wurde anschließend unter Rühren auf 140°C erwärmt, und 2 Stunden bei dieser Temperatur gerührt. Mit fortschreitender Reaktionsdauer reduzierte sich dabei die Temperatur des Reaktionsgemisches bedingt durch die einsetzende Siedekühlung des freigesetzten Monoalkohols. Nun wurde der Rückflusskühler gegen einen absteigenden Kühler getauscht, Ethanol abdestilliert und die Temperatur des Reaktionsgemisches langsam bis auf 180°C erhöht.

Das abdestillierte Ethanol wurde in einem gekühlten Rundkolben gesammelt, ausgewogen und der Umsatz so gegenüber dem theoretisch möglichen Vollumsatz prozentual ermittelt, siehe Tabelle 1.

Am Reaktionsprodukt wurde das Molekulargewicht wie folgt bestimmt: Gewichtsmittel Mw und Zahlenmittel Mn durch Gelpermeationschromatographie bei 20°C mit vier hintereinander geschalteten Säulen (2 x 1000 Å, 2 x 10.000 Å), jede Säule 600x7,8 mm Typ PL-Gel von Fa. Phenomenex; Eluent Dimethylacetamid 0,7 ml/min, Standard Polymethylmethacrylat.

Tabelle 1: Hyperverzweigtes Polycarbonat D1 (es bedeuten TMP Trimethylolpropan, Glyc Glycerin, EO Ethylenoxid, PO Propylenoxid und nb nicht bestimmt)

| Beispiel | D1-a | D1-b |
|---|---|---|
| Alkohol | Glyc x 7,5 PO | TMP x 3,0 EO |
| Abdest. Alkohol[1)] [mol-%] | 75 | 91 |
| Mol.gew. Mw [g/mol] | 4400 | 8600 |
| Mol.gew. Mn [g/mol] | 2000 | 3400 |
| Viskos. (23°C) [mPa s] | 2500 | 26000 |
| OH-Zahl (mg KOH/g) | 177 | 261 |
| [1)] Alkoholmenge bezogen auf Vollumsatz | | |

Als ein bekannter Fließverbesserer D1-V1 (zum Vergleich) wurde Joncryl® ADF-1351 der Fa. Johnson Polymer eingesetzt.

Als ein bekanntes Entformungshilfsmittel D1-V2 (zum Vergleich) wurde Calciumstearat (Ceasit AV der Fa.

Baerlocher) eingesetzt.

Herstellung der Formmassen und Prüfkörper:

Auf einem Zweischneckenextruder (ZSK30 der Fa. Werner & Pfleiderer) wurden die in Tabelle 2 angegebenen Gewichtsteile der Komponente A entwässert und mit den ebenfalls in Tabelle 2 angegebenen Gewichtsteilen der Komponenten B, C, und D bei 250°C und einem Gesamtdurchsatz von 1000 g/h schmelzevermischt und homogenisiert. Nach Granulierung und Trocknung wurden aus den so erhaltenen thermoplastischen Formmassen 1-2 und den zum Vergleich dienenden Formmassen V1-V3 Prüfkörper gespritzt und geprüft. Die Prüfergebnisse werden ebenfalls in Tabelle 2 wiedergegeben.

Tabelle 2:

| Formmasse** | 1 | 2 | V1 | V2 | V3 |
|---|---|---|---|---|---|
| | | | | | |
| Einsatzstoffe | Gew.-Teile | Gew.-Teile | Gew.-Teile | Gew.-Teile | Gew.-Teile |
| A | 35,4 | 35,4 | 36,2 | 35,4 | 36,1 |
| B | 34,4 | 34,4 | 35,1 | 34,4 | 35,0 |
| C* | 28,2 | 28,2 | 28.7 | 28,2 | 28,7 |
| D1-a | 2,0 | - | - | - | - |
| D1-b | - | 2,0 | - | - | - |
| D1-V1 | - | - | - | 2,0 | - |
| D1-V2 | - | - | - | - | 0,2 |
| | | | | | |
| Prüfergebnisse | | | | | |
| $a_n$ [kJ/m$^2$] | 155,0 | 118,0 | 145,0 | 162,0 | 147,0 |
| $a_k$ [kJ/m$^2$] | 17,3 | 12,9 | 15,5 | 12,4 | 15,6 |
| Durchstoßfestigkeit DS [Nm] | 23,7 | 18,3 | 25,0 | 21,2 | 22,6 |
| MVR [ml/10 min] | 17,7 | 21,7 | 13,7 | 16,1 | 14,2 |
| Schmelzeviskosität (220°C) [Pa s]*** | 196,5 | 190,5 | 219,8 | 208,5 | 214,9 |
| Schmelzeviskosität (250°C) [Pa s]*** | 129,0 | 121,2 | 143,5 | 139,9 | 140,4 |
| Vicat B50 [°C] | 85,3 | 91,2 | 91,9 | 87,9 | 92,2 |
| Entformungskraft [N] | 80,8 | 99,3 | 120,9 | 134,6 | 105,2 |
| Transmission [%] | 89,7 | 92,0 | 92,6 | 92,9 | 92,5 |
| Yellowness YI | 19,8 | 9,4 | 11,0 | 10,4 | 10,9 |

* Komponente C wurde mit Restfeuchte eingesetzt, die angegebenen Mengen beziehen sich auf das Trockengewicht
** mit V gekennzeichnete Formmassen sind nichterfindungsgemäß und dienen zum Vergleich.
*** Bestimmt bei einer Scherrate von 1152 1/s.

Die Beispiele belegen die bei vergleichbaren mechanischen und optischen Eigenschaften verbesserte Fließfähigkeit und die einfachere Entformbarkeit der erfindungsgemäßen thermoplastischen Formmassen gegenüber bekannten Formmassen.

**Patentansprüche**

1. Thermoplastische Formmassen, enthaltend eine Mischung aus

(A) 30 bis 68,99 Gew.-%, bezogen auf die Summe der Komponenten (A), (B), (C) und (D) eines Methylmethacrylat-Polymerisates, erhältlich durch Polymerisation einer Mischung, bestehend aus

(A1) 90 bis 100 Gew.-%, bezogen auf(A), Methylmethacrylat,und
(A2) 0 bis 10 Gew.%, bezogen auf (A), eines $C_1$-$C_8$-Alkylesters der Acrylsäure, und

(B) 30 bis 68,99 Gew.-%, bezogen auf die Summe der Komponenten (A), (B), (C) und (D), eines Copolymerisates, erhältlich durch Polymerisation einer Mischung, bestehend aus

(B1) 75 bis 88 Gew.-%, bezogen auf (B), eines vinylaromatischen Monomeren und
(B2) 12 bis 25 Gew.-%, bezogen auf (B), eines Vinylcyanids

und
(C) 1 bis 39,99 Gew.%, bezogen auf die Summeder Komponenten (A), (B), (C) und (D), eines Pfropfcopolymerisates, erhältlich aus

(C1) 60 bis 90 Gew.-%, bezogen auf (C), eines Kerns, erhältlich durch Polymerisation eines Monomerengemisches, bestehend aus

(C11) 65 bis 90 Gew.-%, bezogen auf (C1), eines 1,3-Diens und
(C12) 10 bis 35 Gew.-% bezogen auf (C1), eines vinylaromatischen Monomeren

und
(C2) 5 bis 20 Gew.-%, bezogen auf (C), einer ersten Pfropfhülle, erhältlich durch Polymerisation eines Monomerengemisches, bestehend aus

(C21) 30 bit 60 Gew.-%, bezogen auf (C2), eines vinylaromatischen Monomeren,
(C22) 40 bis 70 Gew.-%, bezogen auf (C2), eines $C_1$-$C_8$-Alkylesters der Methacrylsäure und
(C23) 0 bis 3 Gew.-%, bezogen auf (C2), eines vernetzenden Monomeren,

und
(C3) 5 bis 20 Gew.-%, bezogen auf (C), einer zweiten Pfropfhülle, erhältlich durch Polymerisation eines Monomerengemisches, bestehend aus

(C31) 70 bis 98 Gew.-%, bezogen auf (C3), eines $C_1$-$C_8$-Alkylesters der Methacrylsäure und
(C32) 2 bis 30 Gew.-%, bezogen auf (C3), eines $C_1$-$C_8$-Alkylesters der Acrylsäure,

mit der Maßgabe, dass das Gewichtsverhältnis von (C2) zu (C3) im Bereich von 2:1 bis 1:2 liegt,
und
(D) 0,01 bis 39 Gew.-%, bezogen auf die Summe der Komponenten (A), (B), (C) und (D), mindestens eines hoch- oder hyperverzweigten Polymers, ausgewählt aus der Gruppe

(D1) hoch- oder hyperverzweigter Polycarbonate und
(D2) hoch- oder hyperverzweigten Polyestern des Typs $A_x + B_y$ wobei x mindestens 1,1 und y mindestens 2,1 beträgt,

und
(E) gegebenenfalls üblichen Zusatzstoffen in Mengen von bis zu 20 Gew.-%, bezogen auf die Summe der Komponenten (A), (B), (C) und (D).

2. Thermoplastische Formmassen nach Anspruch 1, **dadurch gekennzeichnet, dass** die Komponente (D1) ein Zahlenmittel des Molekulargewichtes $M_n$ von 100 bis 15000 g/mol aufweist.

3. Thermoplastische Formmassen nach Ansprüchen 1 bis 2, **dadurch gekennzeichnet, dass** die Komponente (D1) eine Glasübergangstemperatur Tg von -80°C bis 140°C aufweist.

4. Thermoplastische Formmassen nach Ansprüchen 1 bis 3, **dadurch gekennzeichnet, dass** die Komponente (D1) eine Viskosität bei 23°C (gemäß DIN 53019) von 50 bis 200000 mPa•s aufweist.

**5.** Thermoplastische Formmassen nach Ansprüchen 1 bis 4, **dadurch gekennzeichnet, dass** die Komponente (D1) erhältlich ist durch ein Verfahren, welches mindestens die folgenden Schritte umfasst:

a) Umsetzung mindestens eines organischen Carbonats (1) der allgemeinen Formel RO(CO)OR mit mindestens einem aliphatischen Alkohol (II), unter Eliminierung von Alkoholen ROH zu einem oder mehreren Kondensationsprodukten (K), wobei es sich bei R jeweils unabhängig voreinander um einen geradkettigen oder verzweigten aliphatischen, araliphatischen oder aromatischen Kohlenwasserstoffrest mit 1 bis 20 C-Atomen handelt, sowie
b) intermolekulare Umsetzung der Kondensationsprodukte (K) zu einem hochfunktionellen, hoch- oder hyperverzweigten Polycarbonat, wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH Gruppe oder eine OH-Gruppe und mehr als eine Carbonatgruppe aufweisen.

**6.** Thermoplastische Formmassen nach Ansprüchen 1 bis 5, **dadurch gekennzeichnet, dass** die Komponente (D2) ein Zahlenmittel des Molekulargewichts $M_n$ von 300 bis 30000 g/mol aufweist.

**7.** Thermoplastische Formmassen nach Ansprüchen 1 bis 6, **dadurch gekennzeichnet, dass** die Komponente (D2) eine Glasübergangstemperatur $T_g$ von -50°C bis 140°C aufweist.

**8.** Thermoplastische Formmassen nach Ansprüchen 1 bis 7, **dadurch gekennzeichnet, dass** die Komponente (D2) eine OH-Zahl (gemäß DIN 53240) von 0 bis 600 mg KOH/g Polyester aufweist.

**9.** Thermoplastische Formmassen nach Ansprüchen 1 bis 8, **dadurch gekennzeichnet, dass** die Komponente (D2) eine COOH-Zahl (gemäß DIN 53240) von 0 bis 600 mg KOH/g Polyester aufweist.

**10.** Thermoplastische Formmassen nach Ansprüchen 1 bis 9, **dadurch gekennzeichnet,** das die Komponente (D2) wenigstens eine OH-Zahl oder COOH-Zahl größer 0 aufweist.

**11.** Thermoplastische Formmassen nach Ansprüchen 1 bis 10, **dadurch gekennzeichnet, dass** die Komponente (D2) erhältlich ist, indem man
eine oder mehrere Dicarbonsäuren oder eines oder mehrere Derivate derselben mit einem oder mehreren mindestens trifunktionellen Alkoholen umsetzt, oder
eine oder mehrere Tricarbonsäuren oder höhere Polycarbonsäuren oder eines oder mehrere Derivate derselben mit einem oder mehreren Dipolen umsetzt.

**12.** Verfahren zur Herstellung der thermoplastischen Formmassen gemäß einem der Ansprüche 1 bis 11, **dadurch gekennzeichnet, dass** man

(A) 30 bis 68,99 Gew.-%, bezogen auf die Summe der Komponenten (A), (B), (C) und (D), eines Methylmethacrylat-Polymerisates, erhältlich durch Polymerisation einer Mischung, bestehend aus

(A1) 90 bis 100 Gew.-%, bezogen auf (A), Methylmethacrylat,und
(A2) 0 bis 10 Gew.-%, bezogen auf (A), eines $C_1$-$C_8$-Alkylesters der Acrylsäure, und

(B) 30 bis 68,99 Gew.-%, bezogen auf die Summe der Komponenten (A), (B), (C) und (D), eines Copolymerisates, erhältlich durch Polymerisation einer Mischung, bestehend aus

(B1) 75 bis 88 Gew.- %, bezogen auf (B), eines vinylaromatischen Monomeren und
(B2) 12 bis 25 Gew.-%, bezogen auf (B), eines Vinylcyanids

und
(C) 1 bis 39,99 Gew.- %, bezogen auf die Summe der Komponenten (A), (B). (C) und (D), eines Pfropfcopolymerisates, erhältlich aus

(C1) 60 bis 90 Gew.-%, bezogen auf (C), eines Kerns, erhältlich durch Polymerisation eines Monomerengemisches, bestehend aus

(C11) 65 bis 90-Gew.-%, bezogen auf (C1), eines 1,3-Diens und
(C12) 10 bis 35 Gew.-% bezogen auf (C1), eines vinylaromatischen Monomeren

und

(C2) 5 bis 20 Gew.-%, bezogen auf (C), einer ersten Pfropfhülle, erhältlich durch Polymerisation eines Monomerengemisches, bestehend aus

(C21) 30 bis 60 Gew.-%, bezogen auf (C2), eines vinylaromatischen Monomeren
(C22) 40 bis 70 Gew.-%, bezogen auf (C2), eines $C_1$-$C_8$-Alkylesters der Methacrylsäure und
(C23) 0 bis 3 Gew.-%, bezogen auf (C2), eines vernetzenden Monomeren.

und

(C3) 5 bis 20 Gew.-%, bezogen auf (C), einer zweiten Pfropfhülle, erhältlich durch Polymerisation eines Monomerengemisches, bestehend aus

(C31) 70 bis 98 Gew.-%, bezogen auf (C3), eines $C_1$-$C_8$-Alkylesters der Methacrylsäure und
(C32) 2 bis 30 Gew.-%, bezogen auf (C3), eines $C_1$-$C_8$-Alkylesters der Acrylsäure,

mit der Maßgabe, dass das Gewichtsverhältnis von (C2) zu (C3) im Bereich von 2:1 bis 1:2 liegt,

und

(D) 0,01 bis 39 Gew.-%, bezogen auf die Summe der Komponenten (A), (B), (C) und (D), mindestens eines hoch- oder hyperverzweigten Polymers, ausgewählt aus der Gruppe

(D1) hoch- oder hyperverzweigter Polycarbonate und
(D2) hoch- oder hyperverzweigter Polyester des Typs $A_x$ + $B_y$ wobei x mindestens 1,1 und y mindestens 2,1 beträgt,

und

(E) gegebenenfalls üblichen Zusatzstoffen in Mengen von bis zu 20 Gew.-%, bezogen auf die Summe der Komponenten (A), (B), (C) und (D),

in der Schmelze vermischt.

**13.** Verwendung der thermoplastischen Formmassen gemäß einem der Ansprüche 1 bis 11 zur Herstellung von Formkörpern, Fasern, Folien oder Schäumen.

**14.** Formkörper, Fasern, Folien oder Schäume enthaltend thermoplastische Formmassen gemäß einem der Ansprüche 1 bis 11.

**15.** Entformungshilfsmittel für thermoplastische Formmassen, umfassend hoch- oder hyperverzweigte Polymere, ausgewählt aus der Gruppe

(D1) hoch- oder hyperverzweigter Polycarbonate und
(D2) hoch- oder hyperverzweigter Polyester des Typs $A_x$ + $B_y$ wobei x mindestens 1,1 und y mindestens 2,1 beträgt.

## Claims

**1.** A thermoplastic molding composition comprising a mixture composed of

(A) 30 to 68.99% by weight, based on the entirety of components (A), (B), (C), and (D), of a methyl methacrylate polymer, obtainable via polymerization of a mixture, composed of

(A1) from 90 to 100% by weight, based on (A), of methyl methacrylate, and
(A2) from 0 to 10% by weight, based on (A), of a $C_1$-$C_8$-alkyl acrylate, and

(B) 30 to 68.99% by weight, based on the entirety of components (A), (B), (C), and (D), of a copolymer, obtainable via polymerization of a mixture, composed of

(B1) from 75 to 88% by weight, based on (B), of a vinylaromatic monomer, and
(B2) from 12 to 25% by weight, based on (B), of a vinyl cyanide

and
(C) from 1 to 39.99% by weight, based on the entirety of components (A), (B), (C), and (D), of a graft copolymer, obtainable from

(C1) from 60 to 90% by weight, based on (C), of a core, obtainable via polymerization of a monomer mixture, composed of

(C11) from 65 to 90% by weight, based on (C1), of a 1,3-diene, and
(C12) from 10 to 35% by weight, based, on (C1), of a vinylaromatic monomer,

and
(C2) from 5 to 20% by weight, based on (C), of a first graft shell, obtainable via polymerization of a monomer mixture, composed of

(C21) from 30 to 60% by weight, based on (C2), of a vinylaromatic monomer,
(C22) from 40 to 70% by weight, based on (C2), of a $C_1$-$C_8$-alkyl methacrylate, and
(C23) from 0 to 3% by weight, based on (C2), of a crosslinking monomer,

and
(C3) from 5 to 20% by weight, based on (C), of a second graft shell, obtainable via polymerization of a monomer mixture, composed of

(C31) from 70 to 98% by weight, based on (C3), of a $C_1$-$C_8$-allkyl methacrylate, and
(C32) from 2 to 30% by weight, based on (C3), of a $C_1$-$C_8$-alkyl acrylate,

with the proviso that the ratio by weight of (C2) to (C3) is in the range from 2:1 to 1:2,
and
(D) from 0.01 to 39% by weight, based on the entirety of components (A), (B), (C), and (D), of at least one highly branched or hyperbranched polymer, selected from the group of

(D1) highly branched or hyperbranched polycarbonates, and
(D2) highly branched or hyperbranched polyesters of $A_x + B_y$ type, where x is at least 1.1 and y is at least 2.1,

and
(E) if appropriate, amounts of up to 20% by weight, based on the entirety of components (A), (B), (C), and (D), of conventional additives.

**2.** The thermoplastic molding composition according to claim 1, in which component (D1) has a number-average molar mass $M_n$ of from 100 to 15 000 g/mol.

**3.** The thermoplastic molding composition according to claim 1 or 2, in which component (D1) has a glass transition temperature Tg of from -80°C to 140°C.

**4.** The thermoplastic molding composition according to claims 1 to 3, in which component (D1) has a viscosity at 23°C (to DIN 53019) of from 50 to 200 000 mPa·s.

**5.** The thermoplastic molding composition according to claims 1 to 4, in which component (D1) is obtainable via a process which comprises at least the following steps:

a) reaction of at least one organic carbonate (I) of the general formula RO(CO)OR with at least one aliphatic alcohol (II), with elimination of alcohols ROH, to give one or more condensates (K), where each R, independently of the others, is a straight-chain or branched aliphatic, araliphatic or aromatic hydrocarbon radical having from 1 to 20 carbon atoms, and
b) intermolecular reaction of the condensates (K) to give a high-functionality, highly branched or hyperbranched polycarbonate, where the quantitative proportion of the OH groups to the carbonates in the reaction mixture is

selected in such a way that the condensates (K) have an average of either one carbonate group and more than one OH group or one OH group and more than one carbonate group.

**6.** The thermoplastic molding composition according to claims 1 to 5, in which component (D2) has a number-average molar mass $M_n$ of from 300 to 30 000 g/mol.

**7.** The thermoplastic molding composition according to claims 1 to 6, in which component (D2) has a glass transition temperature $T_g$ of from -50°C to 140°C.

**8.** The thermoplastic molding composition according to claims 1 to 7, in which component (D2) has an OH number (to DIN 53240) of from 0 to 600 mg KOH/g of polyester.

**9.** The thermoplastic molding composition according to claims 1 to 8, in which component (D2) has a COOH number (to DIN 53240) of from 0 to 600 mg KOH/g of polyester.

**10.** The thermoplastic molding composition according to claims 1 to 9, in which component (D2) has at least one OH number or COOH number greater than 0.

**11.** The thermoplastic molding composition according to claims 1 to 10, in which component (D2) is obtainable by reacting one or more dicarboxylic acids or one or more derivatives of the same with one or more at least trihydric alcohols, or
reacting one or more tricarboxylic acids or higher polycarboxylic acids or one or more derivatives of the same with one or more diols.

**12.** A process for preparation of the thermoplastic molding compositions according to any of claims 1 to 11, which comprises mixing, in the melt,

(A) 30 to 68.99% by weight, based on the entirety of components (A), (B), (C), and (D), of a methyl methacrylate Polymer, obtainable via polymerization of a mixture, composed of

(A1) from 90 to 100% by weight, based on (A), of methyl methacrylate, and
(A2) from 0 to 10% by weight, based on (A), of a $C_1$-$C_8$-alkyl acrylate, and

(B) 30 to 68.99% by weight, based on the entirety of components (A), (B), (C), and (D), of a copolymer, obtainable via polymerization of a mixture, composed of

(B1) from 75 to 88% by weight, based on (B), of a vinylaromatic monomer, and
(B2) from 12 to 25% by weight, based on (B), of a vinyl cyanide

and
(C) from 1 to 39.99% by weight, based on the entirety of components (A), (B), (C), and (D), of a graft copolymer, obtainable from

(C1) from 60 to 90% by weight, based on (C), of a core, obtainable via polymerization of a monomer mixture, composed of

(C11) from 65 to 90% by weight, based on (C1), of a 1,3-diene, and
(C12) from 10 to 35% by weight, based on (C1), of a vinylaromatic monomer,

and
(C2) from 5 to 20% by weight, based on (C), of a first graft shell, obtainable via polymerization of a monomer mixture, composed of

(C21) from 30 to 60% by weight, based on (C2), of a vinylaromatic monomer,
(C22) from 40 to 70% by weight, based on (C2), of a $C_1$-$C_8$-alkyl methacrylate, and
(C23) from 0 to 3% by weight, based on (C2), of a crosslinking monomer,

and

(C3) from 5 to 20% by weight, based on (C), of a second graft shell, obtainable via polymerization of a monomer mixture, composed of

(C31) from 70 to 98% by weight, based on (C3), of a $C_1$-$C_8$-alkyl methacrylate, and
(C32) from 2 to 30% by weight, based on (C3), of a $C_1$-$C_8$-alkyl acrylate,

with the proviso that the ratio by weight of (C2) to (C3) is in the range from 2: 1 to 1:2,

and
(D) from 0.01 to 39% by weight, based on the entirety of components (A), (B), (C), and (D), of at least one highly branched or hyperbranched polymer, selected from the group of

(D1) highly branched or hyperbranched polycarbonates, and
(D2) highly branched or hyperbranched polyesters of $A_x + B_y$ type, where x is at least 1.1 and y is at least 2.1,

and
(E) if appropriate, amounts of up to 20% by weight, based on the entirety of components (A), (B), (C), and (D), of conventional additives.

**13.** The use of the thermoplastic molding compositions according to any of claims 1 to 11 for production of molding, of fibers, of foils, or of foams.

**14.** A molding, a fiber, a foil, or a foam comprising thermoplastic molding compositions according to any of claims 1 to 11.

**15.** A mold-release agent for thermoplastic molding compositions, comprising highly branched or hyperbranched polymers, selected from the group of

(D1) highly branched or hyperbranched polycarbonates, and
(D2) highly branched or hyperbranched polyesters of $A_x + B_y$ type, where x is at lease 1.1 and y is at least 2.1.

## Revendications

**1.** Matières à mouler thermoplastiques, contenant un mélange de

(A) 30 à 68, 99 % en poids, par rapport à la somme des composants (A), (B), (C) et (D), d'un polymère de méthacrylate de méthyle, pouvant être obtenu par polymérisation d'un mélange constitué de

(A1) 90 à 100% en poids, par rapport à (A), de méthacrylate de méthyle, et
(A2) 0 à 10 % en poids, par rapport à (A), d'un ester alkylique en $C_1$-$C_8$ de l'acide acrylique, et

(B) 30 à 68,99 % en poids, par rapport à la somme des composants (A), (B), (C) et (D) d'un copolymère pouvant être obtenu par polymérisation d'un mélange constitué de

(B1) 75 à 88 % en poids, par rapport à (B), d'un monomère vinylaromatique et
(B2) 12 à 25 % en poids, par rapport à (B), d'un cyanure de vinyle

et
(C) 1 à 39,99 % en poids, par rapport à la somme des composants (A), (B), (C) et (D), d'une copolymère greffé pouvant être obtenu à partir de

(C1) 60 à 90 % en poids, par rapport à (C), d'un noyau pouvant être obtenu par polymérisation d'un mélange de monomères constitué de

(C11) 65 à 90 % en poids, par rapport à (C1), d'un 1,3-diène et
(C12) 10 à 35 % en poids, par rapport à (C1) d'un monomère vinylaromatique

et

(C2) 5 à 20 % en poids, par rapport à (C), d'une première enveloppe de greffage, pouvant être obtenue par polymérisation d'un mélange de monomères constitué de

(C21) 30 à 60 % en poids, par rapport à (C2), d'un monomère vinylaromatique,
(C22) 40 à 70 % en poids, par rapport à (C2), d'un ester alkylique en $C_1$-$C_8$ de l'acide méthacrylique et
(C23) 0 à 3 % en poids, par rapport à (C2), d'un monomère réticulable,

et
(C3) 5 à 20 % en poids, par rapport à (C), d'une deuxième enveloppe de greffage, pouvant être obtenue par polymérisation d'un mélange de monomères constitué de

(C31) 70 à 98 % en poids, par rapport à (C3) ; d'un ester alkylique en $C_1$-$C_8$ de l'acide méthacrylique et
(C32) 2 à 30 % en poids, par rapport à (C3) d'un ester alkylique en $C_1$-$C_8$ de l'acide acrylique,

étant entendu que le rapport pondéral de (C2) à (C3) se situe dans la plage allant de 2:1 à 1:2,

et
(D) 0,01 à 39 % en poids, par rapport à la somme des composants (A), (B), (C) et (D), d'au moins un polymère hautement ou hyper-ramifié, choisi dans le groupe

(D1) des polycarbonates hautement ou hyper-ramifiés et
(D2) des polyesters hautement ou hyper-ramifiés du type $A_x + B_y$, x étant au moins égal à 1,1 et y étant au moins égal à 2,1,

et
(E) éventuellement des additifs usuels en quantités allant jusqu'à 20 % en poids, par rapport à la somme des composants (A), (B), (C) et (D).

**2.** Matières à mouler thermoplastiques selon la revendication 1, **caractérisées en ce que** le composant (D1) présente une moyenne en nombre de la masse moléculaire $M_n$ de 100 à 15 000 g/mole.

**3.** Matières à mouler thermoplastiques selon les revendications 1 et 2, **caractérisées en ce que** le composant (D1) présente une température de transition vitreuse Tg de -80 °C à 140°C.

**4.** Matières à mouler thermoplastiques selon les revendications 1 à 3, **caractérisées en ce que** le composant (D1) présente une viscosité à 23 °C (selon DIN 53019) de 50 à 200 000 mPa.s.

**5.** Matières à mouler thermoplastiques selon les revendications 1 à 4, **caractérisées en ce que** le composant (D1) peut être obtenu par un procédé qui comprend au moins les étapes suivantes :

a) réaction d'au moins un carbonate organique (I) de formule générale RO(CO)OR avec au moins un alcool aliphatique (II), avec élimination d'alcools ROH, conduisant à un ou plusieurs produits de condensation (K), R représentant chaque fois, chacun indépendamment, un radical hydrocarboné aliphatique à chaîne droite ou ramifiée, araliphatique ou aromatique, ayant de 1 à 20 atomes de carbone, ainsi que
b) réaction intermoléculaire des produits de condensation (K), pour l'obtention d'un polycarbonate hautement fonctionnel, hautement ou hyper-ramifié, le rapport des quantités des groupes OH aux carbonates dans le mélange réactionnel étant choisi de manière que les produits de condensation (K) comportent en moyenne soit un groupe carbonate et plus d'un groupe OH, soit un groupe OH et plus d'un groupe carbonate.

**6.** Matières à mouler thermoplastiques selon les revendications 1 à 5, **caractérisées en ce que** le composant (D2) présente une moyenne en nombre de la masse moléculaire $M_n$ de 300 à 30 000 g/mole.

**7.** Matières à mouler thermoplastiques selon les revendications 1 à 6, **caractérisées en ce que** le composant (D2) présente une température de transition vitreuse Tg de -50 °C à 140 °C.

**8.** Matières à mouler thermoplastiques selon les revendications 1 à 7, **caractérisées en ce que** le composant (D2) présente un indice de groupes OH (selon DIN 53240) de 0 à 600 mg de KOH/g de polyester.

**9.** Matières à mouler thermoplastiques selon les revendications 1 à 8, **caractérisées en ce que** le composant (D2) présente un indice de groupes COOH (selon DIN 53240) de 0 à 600 mg de KOH/g de polyester.

**10.** Matières à mouler thermoplastiques selon les revendications 1 à 9, **caractérisées en ce que** le composant (D2) présente au moins un indice de groupes OH ou un indice de groupes COOH supérieur à 0.

**11.** Matières à mouler thermoplastiques selon les revendications 1 à 10, **caractérisées en ce que** le composant (D2) peut être obtenu par
mise en réaction d'un ou plusieurs acides dicarboxyliques ou d'un ou plusieurs dérivés de ceux-ci avec un ou plusieurs alcools au moins trifonctionnels, ou
mise en réaction d'un ou plusieurs acides tricarboxyliques ou acides polycarboxyliques supérieurs ou d'un ou plusieurs dérivés de ceux-ci avec un ou plusieurs diols.

**12.** Procédé pour la préparation des matières thermoplastiques selon une ou plusieurs des revendications 1 à 11, **caractérisé en ce qu'**on mélange dans la masse fondue

(A) 30 à 68,99 % en poids, par rapport à la somme des composants (A), (B), (C) et (D), d'un polymère de méthacrylate de méthyle, pouvant être obtenu par polymérisation d'un mélange constitué de

(A1) 90 à 100 % en poids, par rapport à (A), de méthacrylate de méthyle, et
(A2) 0 à 10 % en poids, par rapport à (A), d'un ester alkylique en $C_1$-$C_8$ de l'acide acrylique, et

(B) 30 à 68,99 % en poids, par rapport à la somme des composants (A), (B), (C) et (D), d'un copolymère pouvant être obtenu par polymérisation d'un mélange constitué de

(B1) 75 à 88 % en poids, par rapport à (B), d'un monomère vinylaromatique et
(B2) 12 à 25 % en poids, par rapport à (B), d'un cyanure de vinyle

et
(C) 1 à 39,99 % en poids, par rapport à la somme des composants (A), (B), (C) et (D), d'un copolymère greffé pouvant être obtenu à partir de

(C1) 60 à 90 % en poids, par rapport à (C), d'un noyau pouvant être obtenu par polymérisation d'un mélange de monomères constitué de

(C11) 65 à 90 % en poids, par rapport à (C1), d'un 1,3-diène et
(C12) 10 à 35 % en poids, par rapport à (C1) d'un monomère vinylaromatique

et
(C2) 5 à 20 % en poids, par rapport à (C), d'une première enveloppe de greffage, pouvant être obtenue par polymérisation d'un mélange de monomères constitué de

(C21) 30 à 60 % en poids, par rapport à (C2), d'un monomère vinylaromatique,
(C22) 40 à 70 % en poids, par rapport à (C2), d'un ester alkylique en $C_1$-$C_8$ de l'acide méthacrylique et
(C23) 0 à 3 % en poids, par rapport à (C2), d'un monomère réticulable,

et
(C3) 5 à 20 % en poids, par rapport à (C), d'une deuxième enveloppe de greffage, pouvant être obtenue par polymérisation d'un mélange de monomères constitué de

(C31) 70 à 98 % en poids, par rapport à (C3) ; d'un ester alkylique en $C_1$-$C_8$ de l'acide méthacrylique et
(C32) à 30 % en poids, par rapport à (C3) d'un ester alkylique en $C_1$-$C_8$ de l'acide acrylique,

étant entendu que le rapport pondéral de (C2) à (C3) se situe dans la plage allant de 2:1 à 1:2,

et
(D) 0,01 à 39 % en poids, par rapport à la somme des composants (A), (B), (C) et (D), d'au moins un polymère hautement ou hyper-ramifié, choisi dans le groupe

(D1) des polycarbonates hautement ou typerramifiés et
(D2) des polyesters hautement ou hyper-ramifiés du type $A_x + B_y$, x étant au moins égal à 1,1 et y étant au moins égal à 2,1,

et
(E) éventuellement des additifs usuels en quantités allant jusqu'à 20 % en poids, par rapport à la somme des composants (A), (B), (C) et (D).

**13.** Utilisation des matières à mouler thermoplastiques selon l'une quelconque des revendications 1 à 11, pour la production de corps moulés, de fibres, de films ou de mousses.

**14.** Corps moulés, fibres, films ou mousses contenant des matières à mouler thermoplastiques selon l'une quelconque des revendications 1 à 11.

**15.** Adjuvant de démoulage pour matières à mouler thermoplastiques, comprenant des polymères hautement ou hyper-ramifiés, choisis dans le groupe

(D1) des polycarbonates hautement ou hyper-ramifiés et
(D2) des polyesters hautement ou hyper-ramifiés du type $A_x + B_y$, x étant au moins égal à 1,1 et y étant au moins égal à 2,1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9708241 A
- WO 9745474 A
- WO 9611962 A
- EP 545184 A
- DE 4328004 A
- DE 102004005652
- DE 102004005657
- GB 1472195 A
- DE 10138216
- DE 10147712
- DE 10163163 A


### In der Beschreibung aufgeführte Nicht-Patentliteratur


- **GORDA et al.** *Journal of Applied Polymer Science,* 1993, vol. 50, 1977-1983
- **SUNDER et al.** *Macromolecules,* 2000, vol. 33, 1330-1337
- Encyclopedia of Polymer Science and Engineering. vol. 1, 401 ff
- **HERAUSGEBER E. FOERST ; URBAN ; SCHWARZENBERG.** Ullmanns Encyklopädie der technischen Chemie. 1961, vol. 2/1, 486
- **P.J. FLORY.** *J. Am. Chem. Soc.,* 1952, vol. 74, 2718
- **H. FREY et al.** *Chem. Eur. J.,* 2000, vol. 6 (14), 2499
- **H. FREY et al.** Degree of Branching. *Acta Polym.,* 1997, vol. 48, 30
- Ullmann's Encyclopedia of Industrial Chemistry. Electronic Release. Verlag Wiley-VCH, 2000
- Biotransformations in organic chemistry. **KURT FABER.** Immobilization. Springer Verlag, 1997, 345-356
- **VON W. SCHOLTAN ; H. LANGE.** *Kolloid-Z, und Z.-Polymere,* 1972, vol. 250, 782-796